# EUROPEAN PATENT SPECIFICATION

(11) **EP 4 102 174 B1**
(45) Date of publication and mention of the grant of the patent: **18.09.2024**
(21) Application number: 22177798.0
(22) Date of filing: 08.06.2022
(51) Int. Cl.: G01B 5/255, G01B 21/26

(54) **CLAMP APPLICABLE TO A WHEEL TYRE AND METHOD FOR APPLYING A CLAMP**
KLEMME ZUR ANWENDUNG AN EINEM REIFEN UND VERFAHREN ZUR ANWENDUNG EINER KLEMME
PINCE APPLICABLE À UN PNEU DE ROUE ET PROCÉDÉ D'APPLICATION D'UNE PINCE

(30) Priority: 10.06.2021 IT 202100015209
(43) Date of publication of application: 14.12.2022
(73) Proprietor: NEXION S.p.A., 42015 Correggio (RE) (IT)
(72) Inventor: CORGHI, Giulio, 42015 CORREGGIO (IT)
(74) Representative: Conti, Marco

(56) References cited:
- WO-A1-2014/039053
- WO-A1-2020/234113
- AU-A1- 2019 334 253
- IT-A1- MI20 090 549

## Description

This invention relates to a clamp which is applicable to a vehicle wheel tyre and which is widely used in the field of vehicle alignment systems. This invention also relates to a method for applying a clamp to a vehicle wheel.

To date, clamps of many different kinds which are removably applicable to vehicle tyres are known. These clamps are configured with a central pin to support measuring devices or targets for adjusting vehicle alignment and/or for calibrating the vehicle's sensors such as, for example, ADAS sensors. In this situation, while taking a measurement or performing calibration, the clamp is fixed securely to the vehicle wheel in such a way that the measuring device and/or the calibration target preferably occupy a central position relative to the wheel.

Prior art clamps comprise a body provided with a central portion from which a plurality of arms extend.

Normally, in clamps that are connected to the tyres, the plurality of arms comprises three arms that are angularly spaced at approximately 120° from each other. Slidably mounted on each arm, there is a slider that is provided with a gripping portion configured to engage the tyre tread so that the clamp can be securely applied to the tyre.

Each slider is operatively connected, for example, by means of connecting levers, cables and the like, to a plurality of toothed elements which can be driven in rotation, for example, by means of a handle in such a way that a rotational movement of the toothed elements corresponds to a sliding movement of the sliders along the arms.

More in detail, the sliders can be moved between a closed position, where they are close to the central portion so that the gripping portions hold the tyre tightly and the clamp is applied to the tyre as one therewith, and an open position, where the sliders are away from the central portion of the clamp so that the clamp can be fitted to/removed from the tyre.

In other words, by moving the handle, the toothed elements are set in rotation and the kinematic chain they form part of causes the sliders to move as well, so that the clamp can be fitted to/removed from the tyre. Examples of these clamps are described in WO2014039053A1, WO2017093922A1, ITMI20090549, WO2020234113A1 and WO2018046222.

Disadvantageously, prior art clamps are structurally complex and relatively unreliable.

In particular, the presence of kinematic chains defined by a plurality of intermeshed toothed elements not only makes the clamp difficult and complex to construct but also particularly expensive.

Moreover, after being applied to the tyre, these clamps tend to slacken (or open) and thus come away from the tyre.

More in detail, once the slider gripping portions have been tightened around the tyre, the sliders tend to slip towards the open position on account of the elastic return effect of the tyre, thus gradually losing their grip on the tyre.

To overcome this drawback, some prior art clamps, such as, for example, the clamp described in documents AU2019334253A1 (WO2020048781) and WO2020048780A1, are provided with locking devices configured to prevent the sliders from moving away from the tyre.

More in detail, the prior art locking devices are configured to operate on the toothed elements to prevent them from moving, thereby preventing the sliders from moving towards the open position.

Thus, in use, once the sliders have been moved to the closed position so that the clamp engages the tyre, the locking devices are activated to hold the sliders in position and stop the clamp from slackening.

In the case described in document WO2020048780A1, the locking device is embodied as a lever that is movable in rotation and is provided, at one end, with a toothed wheel that is meshable with one or more of the toothed elements of the clamp and, at the other end, with an elastic return element configured to move the locking device from a working position, where it operates on the toothed elements, to a rest position, where it is clear of the toothed elements. At the working position, the locking device operates on the toothed elements in such a way as to prevent them from rotating freely, and instead, at the rest position, the locking device allows the toothed elements to turn so that the sliders can move from the closed position to the open position or vice versa.

Disadvantageously, this clamp, too, has inherent drawbacks in terms of structural complexity.

Although the locking device obviates the problem of opening or slackening the clamp, it is particularly complex because the locking device needs to interact with the toothed elements.

In effect, in use, when the locking device is activated, it interacts with one or more of the toothed elements in order to prevent the sliders from moving towards the open position.

In terms of its construction, therefore, the locking device described above is complex and expensive.

Another disadvantage is due to the structural complexity of the clamp as a whole, on account of the toothed elements. This structural complexity contributes to making the clamp particularly cumbersome and heavy.

The drawbacks of the prior art also include the fact that placing the prior art clamps, hence applying and removing them, is a particularly time-consuming operation.

The technical purpose of this invention is to overcome the above mentioned disadvantages of the prior art by providing a clamp which is applicable to a wheel tyre and a method for applying the clamp.

The aim of this invention is to provide a clamp that is easy to make and use.

A further aim of this invention is to provide a clamp that is quick and practical to fit and remove to and from the vehicle tyre.

A further aim of this invention is to provide a clamp that is simple in terms of construction.

A further aim of this invention is to provide a clamp that is robust and inexpensive.

A further aim of this invention is to provide a simple and reliable method for applying the clamp.

The technical purpose indicated and the aims specified are substantially achieved by a clamp which is applicable to a wheel tyre and a method for applying the clamp comprising the technical features described in one or more of the accompanying claims. The dependent claims correspond to possible embodiments of the invention.

More specifically, the technical purpose indicated and the aims specified are achieved by a clamp which is applicable to a wheel tyre and which comprises a body including a plurality of arms extending radially from a central axis and angularly distributed about the central axis.

According to an aspect of this disclosure, the body comprises a central portion of substantially circular shape from which the arms extend. In this situation, the central portion and the arms define a substantially star-like shape.

The arms are three in number and, in a preferred embodiment, are angularly spaced from each other by an angle different from 120°.

According to an aspect of this disclosure, the clamp also comprises a supporting element - for example, a pin - extending away from the body along the central axis. This supporting element is configured to reversibly engage a measuring device, a calibration target or similar accessories useful for vehicle wheel alignment and/or for calibrating vehicle sensors. The clamp also comprises a plurality of sliders, each slidably coupled to a respective arm to move radially between a retracted position and an extracted position.

More in detail, at the retracted position, each slider is at a first distance from the central axis and at the extracted position, it is at a second distance from the central axis, greater than the first distance.

The sliders are configured to engage the vehicle tyre to allow the clamp to be firmly and securely applied to the tyre.

Each slider includes a side abutment surface configured to abut against the tyre tread so as to hold the clamp on the tyre.

The side abutment surface defines a first portion of the slider and extends perpendicularly to the plane defined by the clamp body on the side opposite the supporting element.

In a possible embodiment, the side abutment surface has a pattern on it, for example, knurling, configured to increase its grip on the tyre tread when in abutment against it.

According to a further aspect of this invention, each slider also comprises a front abutment surface configured to abut against a sidewall of the tyre when the clamp is being applied to the tyre.

The front abutment surface defines a second portion of the slider and extends in parallel with the arm on which the slider is mounted, so that when the clamp is applied to the tyre, the front abutment surface is interposed between the sidewall of the tyre and the respective arm and acts as a shim which helps prevent contact between the arm and the wheel rim.

Thus, the sliders are each defined by a first and a second portion making, between them, a right angle, which makes the slider substantially L-shaped.

According to an aspect of this disclosure, each slider also comprises an engagement portion configured to engage the arm so that the slider can slide along the respective arm.

In an embodiment, the first and the second portion are made in one piece with the engagement portion.

Alternatively, each slider comprises an auxiliary portion extending in parallel with the second portion and configured to connect the first and second portions to the engagement portion.

More in detail, the auxiliary portion is slidably movable in a cavity made in the engagement portion between a least extracted position and a most extracted position. In this situation, the clamp can also be applied to tyres larger in diameter than those which the sliders, at the extracted position, would be able to grip. In effect, the auxiliary portion can slide out of the cavity to allow the first portion to be extended beyond the end part of the arm, thereby acting as an extension of the arm.

The clamp also comprises a manoeuvring member connected to the body; the manoeuvring member constitutes an operating means which has the function to operate the radial movement of the sliders between the retracted position and the extracted position.

The clamp also comprises a plurality of connecting levers, each having a first end that is articulated to the manoeuvring member and a second end that is articulated to a corresponding slider of the plurality of sliders to allow a simultaneous movement of the sliders so that a movement of the manoeuvring member in a first direction corresponds to a movement of the sliders towards the retracted position and a movement of the manoeuvring member in a second direction, opposite to the first direction, corresponds to a movement of the sliders towards the extracted position.

In a possible embodiment (the one illustrated), the manoeuvring member is rotatably connected to the body to rotate about the central axis so that a rotation of the manoeuvring member in a first direction corresponds to a movement of the sliders towards the retracted position and a rotation of the manoeuvring member in a second direction, opposite to the first direction, corresponds to a movement of the sliders towards the extracted position. It should therefore be noted that any reference to the movement of the manoeuvring member as this disclosure continues may be understood as being a rotation according to this embodiment. Alternatively, the manoeuvring member might be movable in translation (or according to another predetermined trajectory, for example, roto-translation) so that a translation (or more generally speaking, any movement) of the manoeuvring member in a first direction corresponds to a movement of the sliders towards the retracted position and a translation (or more generally speaking, any movement) of the manoeuvring member in a second direction, opposite to the first direction, corresponds to a movement of the sliders towards the extracted position.

In a possible embodiment, the manoeuvring member is embodied as a disc with a circular cross section centred on the central axis; in this case, moving the manoeuvring member comprises rotating the disc.

Alternatively, the manoeuvring member may have any shape. For example, the manoeuvring member might be slidable (by translation) along the central axis or along an axis parallel thereto or along an axis defined by a slideway that is inclined (transverse) to the plane defined by the clamp body. In this case, the manoeuvring member is kinematically connected to the sliders by connecting levers (one connecting lever for each slider) which, by effect of the movement of the manoeuvring member towards or away from the clamp body, undergo corresponding oscillations such that their inclination to the plane defined by the clamp body varies according to the movement of the manoeuvring member (towards or away from the clamp body). For example, each connecting lever has one end that is articulated to the manoeuvring member and another end that is articulated to the respective slider, if necessary by a cam (for example, defined by a slot). That way, translating the manoeuvring member along a transverse axis (for example, the central axis), corresponds to simultaneously translating the sliders along the radial axes defined by the arms of the clamp body (thus defining a self-centring system). In another example embodiment with a slidable manoeuvring member, the connecting levers might be hinged to sliders that are pivoted to the ends of the arms of the clamp body so that translating the manoeuvring member along the transverse axis (for example, the central axis) corresponds to simultaneously rotating the sliders (defining a self-centring system) from a released position, where the first portion of each slider (with the related side abutment surface) is rotated backwards towards the user (so as not to interfere with the tyre), and a gripping position, where the first portion of each slider (with the related side abutment surface) is rotated forward towards the tyre (so as to grip the tyre tread).

The rest of this description also applies to the embodiment wherein the manoeuvring member is rotary (e.g., a disc).

The connecting levers directly engage the manoeuvring member at hinge points.

Advantageously, the absence of elements, such as ring nuts or toothed wheels, for transmitting motion from the manoeuvring member to the connecting levers makes the clamp less complex, less heavy and less expensive.

The clamp also comprises a handgrip which is connected to (integral with) the manoeuvring member and which can be gripped by a user to directly move the manoeuvring member (in the first and second directions).

The handgrip is integral with the manoeuvring member; in other words, the handgrip is fixed to the manoeuvring member (so that the handgrip has a rigid mechanical connection to the manoeuvring member). Therefore, the handgrip can be gripped by a user to move the manoeuvring member directly (in fact, a movement of the handgrip directly determines a corresponding movement of the manoeuvring member). Advantageously, the absence of elements, such as worm screws or toothed wheels, for transmitting motion from the tool operable by hand by the user and the manoeuvring member makes the clamp particularly simple, light and cheap.

According to an aspect of this disclosure, the handgrip is disposed eccentrically relative to the central axis; in other words, the handgrip is spaced from the central axis (hence, relative to the central axis, it is at a non-zero radial distance which constitutes a lever arm for a force that generates an angular momentum on the clamp body).

In an example embodiment, the handgrip is oriented along an axis perpendicular to the central axis.

In a possible example embodiment, the handgrip has the shape of a bar. Alternatively, the handgrip might have the shape of a knob or other shape which is convenient for the user to grip.

According to an aspect of this disclosure, the handgrip comprises a rod having a first end that is connected to the manoeuvring member to be integral therewith and a second end that extends radially relative to the central axis. The second end may comprise a portion that is covered with a non-slip material (rubber, for example) to make it easier for the operator to grip it.

According to another aspect of this disclosure, the handgrip is made in one piece with the manoeuvring member. More specifically, the handgrip is an extension of the manoeuvring member and is suitably contoured to allow an operator to grip it. In this situation, the handgrip has a first end that is integral with the manoeuvring member and a second end that extends radially relative to the central axis and that may, if necessary, be covered with a non-slip material (rubber, for example) to make it easier to grip.

According to an aspect of this disclosure, the clamp also comprises an additional grip connected to the clamp body and positioned in a plane containing one of the arms and the central axis.

In a possible embodiment, the additional grip is cantilevered to the clamp arm so it can be easily gripped by the user.

Advantageously, the additional handgrip makes it easier for the user to position the clamp.

In use, therefore, the user grips the additional handgrip with one hand, to orient the clamp in such a way that the arm with the additional handgrip on it is disposed vertically, and the handgrip with the other hand. In this situation, the user moves the manoeuvring member in the second direction so the sliders slide towards the extracted position.

In the case of a tyre having a particularly large diameter, that is to say, in the case where the radial distance between the sliders at the extracted position and the central axis is smaller than the radial distance between the centre of the wheel and the tyre tread, the user extracts the auxiliary portion from the engagement portion of the sliders so that the first portion of each slider extends further out from the respective arm.

Next, the side abutment surface of the slider corresponding to the vertically disposed arm can be positioned at the tyre tread by the user.

In an alternative positioning method, the user moves the clamp near the tyre so that the central axis lies in proximity to the axis of rotation of the tyre. In these situations, the clamp is moved closer to the tyre until the front abutment surfaces of each slider are in contact with the sidewall of the tyre.

The user then moves the manoeuvring member in the first direction so that the sliders move towards the tyre. In other words, the user moves the handgrip towards the second handgrip.

In a possible embodiment in which the manoeuvring member is rotatably connected to the clamp body, the handgrip describes an angle of rotation less than or, at most, equal to 90° about the additional handgrip. When the sliders are at the extracted position, the handgrip is inclined by a first angle less than or equal to 90° relative to the additional handgrip, and when the sliders are in contact with the tyre tread, the handgrip is inclined to the additional handgrip by a second angle which is different from (less than or, alternatively, greater than) the first angle. That means the clamp is easier for the user to use because it is more ergonomic and handier.

There are two embodiments for moving the handgrips, hence the sliders (that is, the jaws which operatively grip the tyre): in a first embodiment, the sliders are closed by moving the handgrips closer together and, in a second embodiment, the sliders are closed by moving the handgrips away from each other (in the latter case, the operator can apply more force using their body weight).

In an embodiment alternative to the above, the sliders can be brought from the extracted to the retracted position by moving the handgrip away from the additional handgrip so that the operator can more conveniently tighten the sliders around the tyre (also with the help of the weight of their body). In this situation, therefore, moving the handgrip away from the additional handgrip corresponds to sliding the sliders towards the retracted position, that is, towards the tyre, whereas moving the handgrip towards the additional handgrip corresponds to sliding the sliders towards the extracted position.

Once the sliders have been brought into contact with the tyre, the side abutment surface of each applies a gripping pressure on the tyre tread so as to hold the clamp on the wheel.

To prevent this pressure from slackening on account of the elastic return of the tyre tread or in any case to ensure a correct hold, the clamp comprises a locking device that is movable between a locked position, where it acts on the manoeuvring member to prevent it from moving in the second direction, and an unlocked position, where it allows the manoeuvring member to move in the first and second directions. According to an aspect of this disclosure, the locking device, when it is at the locked position, can allow movement in the first direction so that the user can ensure that the clamp is securely tightened on the tyre.

In a possible embodiment, the locking device comprises a braking element which, at the locked position, is configured to apply a locking pressure on the manoeuvring member by means of a vice connected to the clamp body.

Alternatively, the manoeuvring member comprises a plurality of recesses and the locking device comprises a pin that is movably associated with the clamp body to move in translation between a spaced-apart position, where the pin is distal from the manoeuvring member to create the unlocked position of the locking device, and a close-together position, where the pin is at least partly inserted in one of the recesses to create the locked position. In a mirror symmetrical embodiment, the plurality of recesses is formed in the clamp body and the pin is movably associated with the manoeuvring member.

In an embodiment, the manoeuvring member comprises an outer toothed profile and the locking device comprises a stop tooth, for example, a pawl, configured to engage with one of the teeth of the outer toothed profile when the locking device is at the locked position.

To switch the locking device from the locked to the unlocked position and vice versa, the clamp comprises an actuating mechanism connected to the locking device and operable by the user.

This mechanism may comprise levers, keys, pushbuttons and any other actuating element.

According to an aspect of this disclosure, the actuating mechanism may be made on the handgrip (or in proximity thereto) so that, when the sliders have moved into contact with the tyre, a user with a hand operatively holding the handgrip can operate the locking device to prevent the sliders from slipping towards the extracted position.

According to another aspect of this disclosure, the handgrip itself may constitute the actuating mechanism so that when the sliders have moved into contact with the tyre, the locking device can be activated by turning the handgrip about its axis, by a tilting or similar movement.

According to a further aspect of this disclosure, the actuating mechanism may be made on the additional handgrip so that, when the sliders have moved towards the retracted position, a user with a hand operatively holding the additional handgrip can operate the locking device to prevent the sliders from slipping towards the extracted position.

Alternatively, the actuating mechanism may be made on the clamp body and activated when the user lets go of the handgrip.

In use, therefore, once the sliders have moved simultaneously from the extracted position to the retracted position in contact with the tyre tread, the locking device is activated and the clamp securely grips the tyre.

Also an object of this disclosure is a method for applying a clamp to a vehicle wheel. The method comprises a step of preparing a clamp comprising a body including a plurality of arms disposed radially around a central axis and a plurality of sliders slidably coupled to the arms to move radially between a retracted position, where they are proximal to the central axis, and an extracted position, where they are distal from the central axis.

The clamp also comprises an manoeuvring member connected to the sliders by a plurality of connecting levers and to the clamp body to move in a first direction to bring the sliders towards the retracted position and in a second direction, opposite to the first direction, to bring the sliders towards the extracted position. The clamp then comprises a locking device, such as, for example, a brake, a pin, a pawl or the like, movable between a locked position, where it prevents the manoeuvring member from moving in the second direction, and an unlocked position, where it allows the manoeuvring member from moving in the first and second directions. The clamp also comprises a handgrip which is integral with the manoeuvring member and which can be gripped by a user to move the manoeuvring member.

If the manoeuvring member is rotatably connected to the clamp body (as shown in the accompanying drawings) to rotate about the central axis, the locking device, when it is at locked position, is configured to allow the manoeuvring member to rotate in the second direction and, when it is at the unlocked position, to allow the manoeuvring member to rotate in the first and second directions.

After the step of preparing, the method comprises a step of directly moving the manoeuvring member by acting on the handgrip.

In a possible embodiment, the manoeuvring member is moved translationally. Alternatively, the manoeuvring member is moved roto-translationally.

In the embodiment illustrated in the drawings accompanying this disclosure, the step of directly moving is performed by acting on the handgrip to turn the manoeuvring member in the second rotation direction to move the sliders towards the extracted position, with the locking device at the unlocked position. The method also comprises a step of moving the clamp towards the vehicle wheel so that each slider, with its side abutment surface, rests on the tyre tread and a step of driving the manoeuvring member in the first direction with the handgrip, to move the sliders simultaneously towards the retracted position.

In the step of driving it, the manoeuvring member can be moved rotationally. Alternatively, the manoeuvring member can be moved translationally or roto-translationally.

The method then comprises a step of moving the locking device from the unlocked position to the locked position to stop the sliders from unwantedly slipping towards the extracted position.

When the clamp has finished being used, the locking device is moved from the locked position to the unlocked position so as to allow moving the sliders towards the extracted position, hence slackening the clamp from the tyre.

Advantageously, the method is simple and reliable, allowing the clamp to be applied to the tyre in little time.

Further features and advantages of this invention are more apparent in the indicative, hence non-limiting, description of an embodiment of a clamp which is applicable to a vehicle wheel tyre and a method for applying a clamp to a vehicle wheel.

The description is set out below with reference to the accompanying drawings which are provided solely for purposes of illustration without restricting the scope of the invention and in which:
- Figures 1A and 1B show perspective views of a clamp according to this disclosure in two operating configurations;

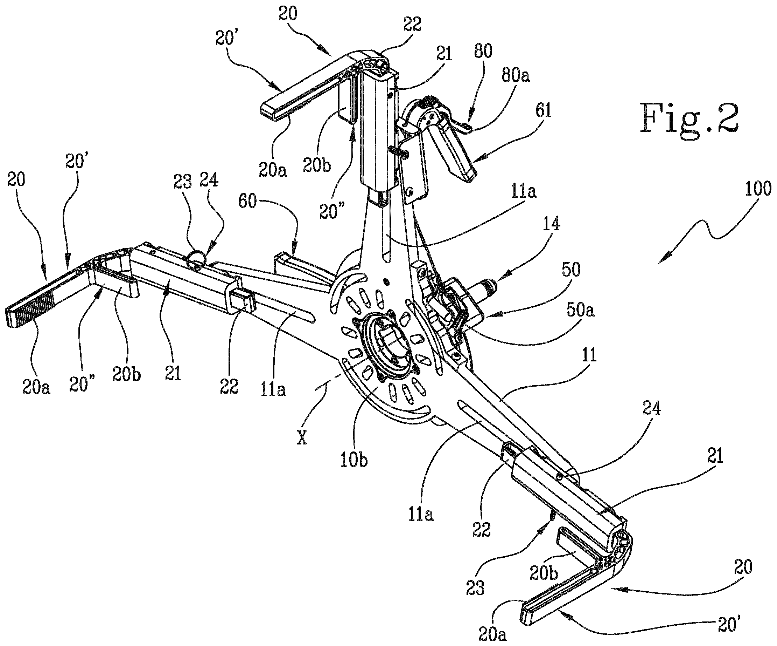

- Figure 2 shows a rear perspective view of a clamp according to this disclosure;
- Figure 3A shows a perspective view of a possible embodiment of the clamp;

- Figure 3B shows a detail of another possible embodiment of the clamp;
- Figures 4A and 4B show two embodiments of a slider of the clamp of this disclosure;
- Figure 5 shows a perspective view of a clamp according to this disclosure, mounted on a tyre;
- Figures 6A-6E show schematic, cross-sectional views of embodiments of the clamp;

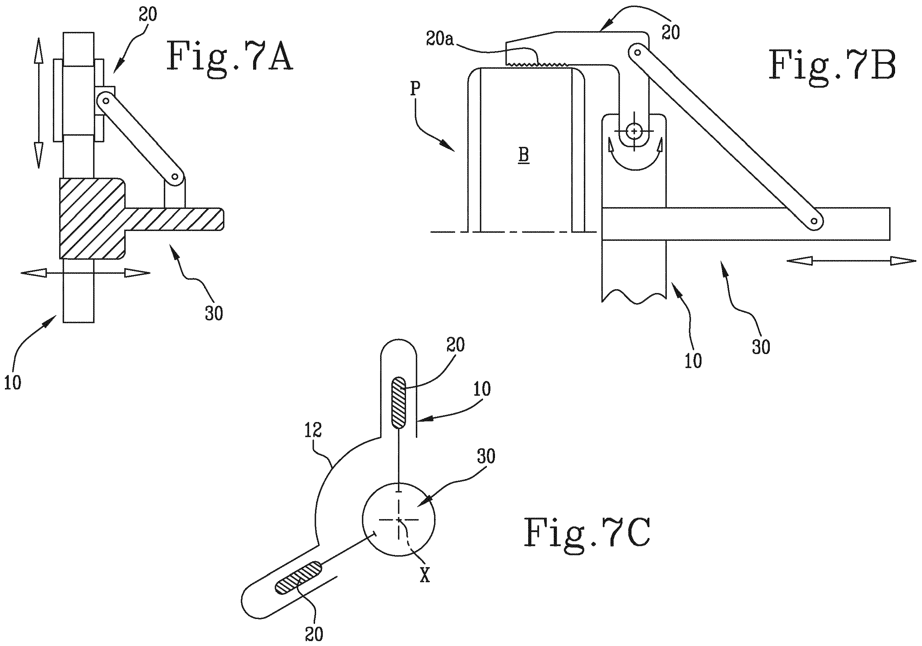

- Figures 7A-7C shows schematic views of other embodiments of parts of the clamp.

With reference to the accompanying drawings, the numeral 100 denotes a clamp which is applicable to a tyre P of a vehicle wheel.

The clamp 100 comprises a body 10 including a plurality of arms 11 extending radially from a central axis X and angularly distributed about the central axis X.

According to an aspect of this disclosure, the clamp body 10 is shaped like a plate and has a front face 10a and a rear face 10b.

In a possible embodiment, the clamp body 10 also comprises a central portion 12 which has a substantially circular cross section and from which the arms 11 extend to give the clamp body 10 a substantially star shaped structure.

In a possible embodiment, the clamp 100 comprises three arms 11 which are angularly spaced from each other by an angle of 120°. Alternatively, as shown in the accompanying drawings, the angle may be different from 120°.

The clamp body 10 also comprises a level configured to indicate the slope of the body 10 itself relative to a reference plane, specifically relative to a horizontal plane (at right angles to the vector of the force of gravity). The level is oriented according to a reference axis; preferably, the reference axis of the level is perpendicular to one of the arms 11. It should be noted that in an example embodiment, there are three arms and one of the three is central relative to the other two (that is, between a right arm and a left arm), being angularly spaced from the right arm and from the left arm by an angle of less than 120 degrees (but preferably greater than 90 degrees). In this example, the reference axis of the level is preferably perpendicular to the central arm.

In a possible embodiment, the central portion 12 of the clamp body 10 comprises a housing that is configured to receive the level firmly and securely.

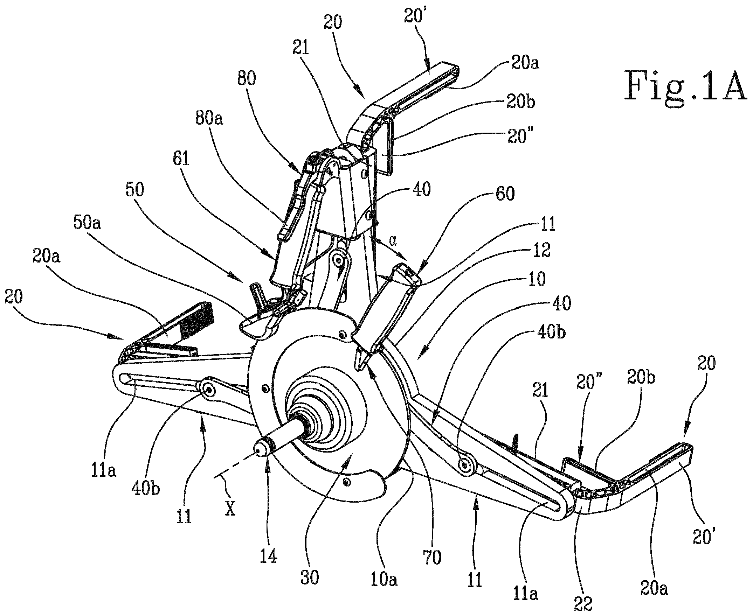

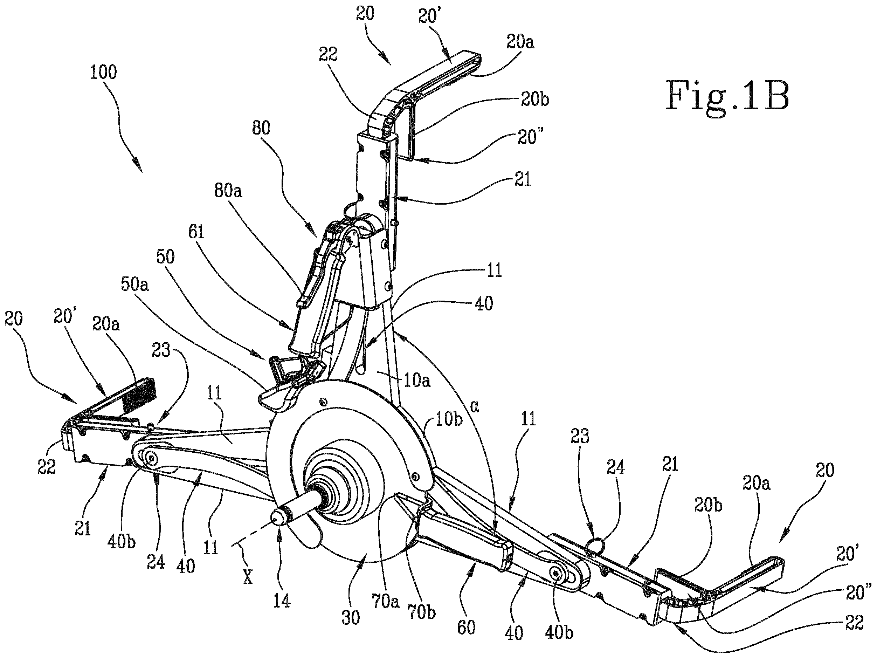

The clamp 100 also comprises a plurality of sliders 20, each slidably coupled to a respective arm 11 to move radially between a retracted position, where each slider 20 is at a first distance from the central axis X (Figure 1A), and an extracted position, where it is at a second distance from the central axis X (Figure 1B), greater than the first distance.

The sliders 20 are steplessly slidable along the respective arm 11 and may adopt any position intermediate between the extracted position and the retracted position.

According to an aspect of this disclosure, each arm 11 comprises a groove 11a running along the direction of extension of the arm 11 and configured to guide the sliding movement of the respective slider 20 from the extracted position to the retracted position or vice versa.

To facilitate sliding each slider 20 along the respective groove 11a, the part of the slider 20 that is slidably engaged in the groove 11a is made from a low-friction material such as Teflon, for example.

As shown in the accompanying drawings, each slider 20 comprises an engagement portion 21 which slidably engages the respective arm 11 so as to allow the aforesaid sliding movement from the extracted position to the retracted position and vice versa.

As shown in the accompanying drawings, each slider 20 also includes a side abutment surface 20a configured to abut against, and apply a gripping pressure on, the tread B of the tyre P so as to hold the clamp 100 on the tyre P.

The side abutment surface 20a defines a first portion 20' of the slider 20 extending perpendicularly to the plane defined by the clamp body 10 on the side of the rear face 10b of the clamp body 10 itself.

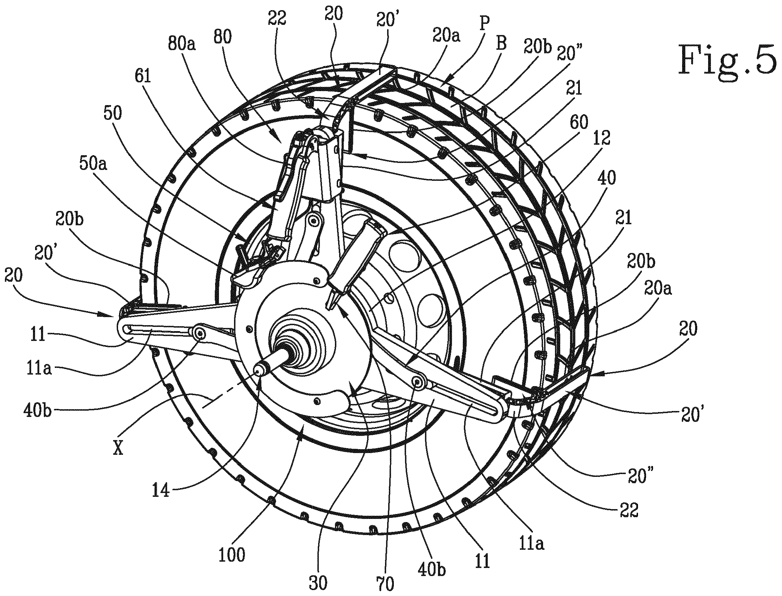

According to a further aspect of this disclosure, each slider 20 also comprises a front abutment surface 20b configured to abut against a sidewall of the tyre P when the clamp 100 is applied to the tyre P (Figure 5).

The front abutment surface 20b defines a second portion 20" of the slider 20 and extends in parallel with the arm 11 on which the slider 20 is slidably mounted. In this situation, each slider 20 is substantially in the shape of an L, where the side abutment surface 20a and the front abutment surface 20b are substantially at right angles to each other.

According to an aspect of this disclosure, the side abutment surface 20a is knurled (or wavy) so it can firmly grip the tyre P, whereas the front abutment surface 20b is smooth so it can abut up against and slide on the sidewall of the tyre P.

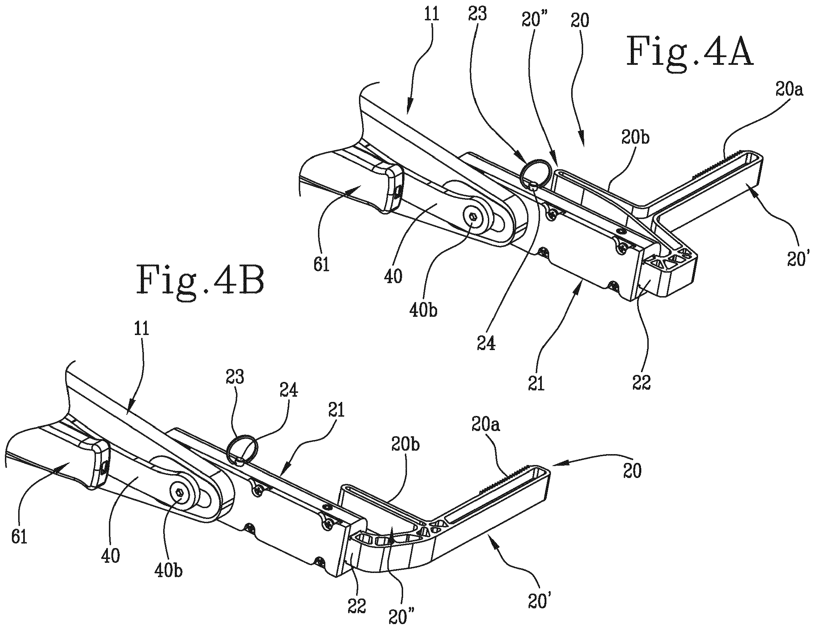

Two possible alternative embodiments of the sliders 20 are shown in Figures 4A and 4B.

When the clamp 100 is applied to the tyre P, the sliders 20 are first made to slide towards the extracted position to allow the clamp body 10 to move closer to the tyre P and then to slide in such a way that the side abutment surface 20a is in contact with the tread B of the tyre P while the front abutment surface 20b is interposed between the sidewall of the tyre P and the respective arm 11. In this situation, the front abutment surface 20b acts as a spacer which disposes the clamp 100 in a plane parallel to the wheel so the arm 11 does not come into contact with the wheel rim and thus prevents scraping and scratching of the rim (Figure 5).

Scratching and other damage to the wheel rim are also avoided by the fact that the clamp 100 is applied to the tyre P and not directly to the wheel rim. More specifically, unlike prior art clamps, where the gripping fingers or sliders are inserted directly into the rim, the clamp 100 of this disclosure is configured to act with the side abutment surfaces 20a in such a way as to apply a gripping pressure with the help of the elastic deformation of the tread B of the tyre P. This aspect will become clearer as this description continues.

According to an aspect of this disclosure, each slider 20 also comprises an auxiliary portion 22 extending in parallel with the second portion 20" and slidably insertable into a cavity made in the engagement portion 21 so the first portion 20' can extend radially by a quantity greater than the extension which the groove 11a of the arm 11 allows the slider 20.

In other words, the auxiliary portion 22 acts as a prolongation of the respective arm 11 so as to allow the side abutment surface 20a to abut against the tyre P even in the case of tyres of particularly large diameter.

In effect, in use, once the slider 20 has reached the extracted position and cannot slide any further along the arm 11, the auxiliary portion 22 can be extracted from the engagement portion 21 so that the first portion 20' protrudes radially further out from the arm 11 and can abut up against the tread B of the tyre P.

According to an aspect of this disclosure, the auxiliary portion 22 can be retracted into and extracted from the cavity in the engagement portion 21 to occupy a plurality of positions intermediate between a least extracted position (shown in the accompanying drawings) and a most extracted position so as to adapt the clamp 100 to the diameter of the tyre P it is being applied to.

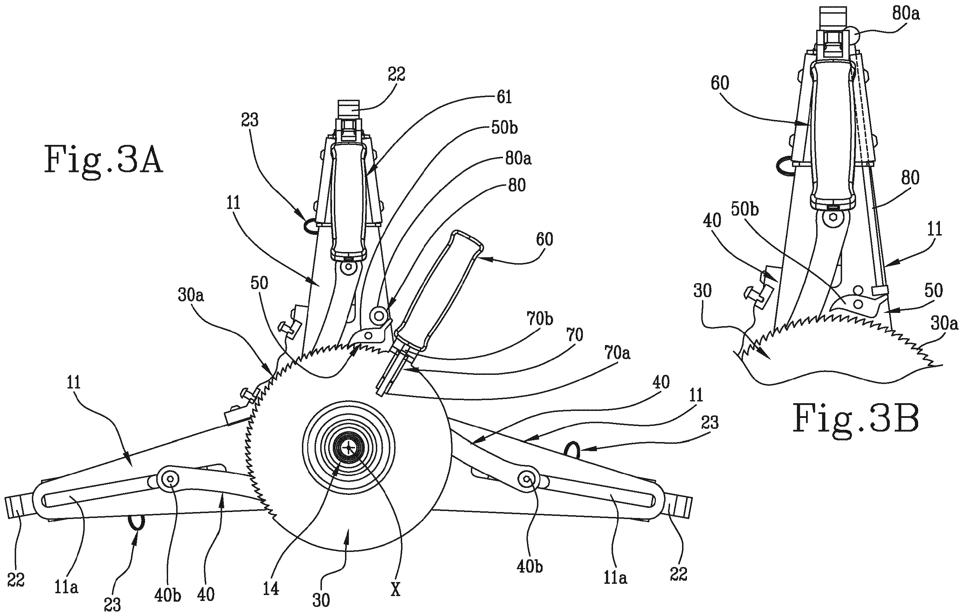

For each slider 20, the clamp 100 also comprises a stop mechanism 23 (shown, for example, in Figure 3A) configured to stop the auxiliary portion 22 from sliding in the cavity once the auxiliary portion 22 has been extracted or retracted to adopt a desired intermediate position.

In a possible embodiment, the stop mechanism 23 consists of a succession of holes, made on the auxiliary portion 22, into which a pin or a rod 24 can be inserted through a hole in the engagement portion 21 in such a way as to stop the auxiliary portion 22 at the desired intermediate position.

Alternatively, the auxiliary portion 22 might be stopped in the engagement portion 21 by means of an elastic element, a tightening element, a set screw (or the like), configured to be pressed against the auxiliary portion 22 to stop it at an intermediate position or to release the auxiliary portion 22 to allow it to slide in the engagement portion 21.

In use, therefore, if the clamp 100 needs to be applied to a tyre P whose diameter is larger than a maximum diameter accessible to the sliders 20 at the extracted position, an operator extracts the auxiliary portion 22 of each slider 20 from the cavity in the engagement portion 21 until it reaches a desired intermediate position, that is to say, a position where the first portion 20' is able to abut up against the tread B of the tyre P. In this situation, the operator activates the stop mechanism 23 to prevent the auxiliary portion 22 from unwantedly continuing to slide in or out of the engagement portion 21.

More in detail, the step of extracting the auxiliary portion 22 of each slider 20 is carried out in such a way that the auxiliary portions 22 of the sliders 20 of the clamp 100 all protrude from the respective engagement portions 21 by the same amount. In this situation, once the auxiliary portions 22 of the sliders 20 have all been extracted by the same amount, the stop mechanism 23 of each slider 20 is activated to prevent the auxiliary portions 22 from sliding and so as to maintain the symmetry of the clamp 100.

If the position of the first portions 20' of the sliders 20 relative to the respective engagement portions 21 needs to be changed again, for example, in the case where the clamp 100 has to be mounted on a tyre P whose diameter is smaller than the preceding one but in any case larger than the diameter that can be reached by the sliders 20 at the extracted position, the operator releases the stop mechanism 23, retracts the auxiliary 22 into the cavity of the engagement portion 21 until reaching the desired intermediate position and then activates the stop mechanism 23 again.

Advantageously, the possibility of extracting the first portion 20', which defines the side abutment surface 20a of the slider 20, relative to the engagement portion 21 allows applying the clamp 100 also to tyres P whose diameter is larger than that accessible by the sliders 20 at the extracted position.

The clamp 100 of this disclosure also comprises an manoeuvring member 30 that is movably connected to the clamp body 10.

In the embodiment illustrated in the accompanying drawings, the manoeuvring member 30 is rotatably connected to the clamp body 10 to rotate about the central axis X.

As shown in Figure 5, the manoeuvring member 30 is mounted on the front face 10a of the clamp body 10 so that when the clamp 100 is applied to the tyre P, the manoeuvring member 30 faces towards a user of the clamp 100.

More in detail, the manoeuvring member 30 is mounted on the central portion 12 of the clamp body 10.

According to an aspect of this disclosure, the manoeuvring member 30 is made in the form of a disc, preferably a metal disc, centred on the central axis X.

Alternatively, the manoeuvring member 30 may be embodied in any shape.

According to an aspect of this disclosure, the clamp 100 also comprises a supporting element 14, such as, for example, a pin or a hook, built into the clamp body 10 and configured to support a calibration target and/or a measuring device to perform a calibration or a variation in the alignment of a vehicle once the clamp 100 has been applied to the vehicle tyre P.

The supporting element 14 extend away from the front face 10a of the clamp body 10 along a direction transverse thereto, and, more specifically, it extends along the central axis X.

As shown in Figure 1A, the clamp 100 also comprises a plurality of connecting levers 40.

In a possible embodiment, the connecting levers 40 are made in the form of rods or links, preferably made of metal.

The connecting levers 40 each have a first end (not shown in the accompanying drawings) that is articulated to the manoeuvring member 30 and a second end 40b that is articulated to a corresponding slider 20 of the plurality of sliders 20 to allow the sliders 20 to move simultaneously so that a movement of the manoeuvring member 30 in a first direction corresponds to a movement of the sliders 20 towards the retracted position and a movement of the manoeuvring member 30 in a second direction, opposite to the first direction, corresponds to a movement of the sliders 20 towards the extracted position.

In other words, the connecting levers 40 allow the sliders 20 associated with them to slide simultaneously along the respective arm 11 so they all simultaneously occupy the same radial position relative to the central axis X.

This aspect is advantageous because it allows self-centring the clamp 100 while it is being applied to the tyre P.

In the embodiments shown in the accompanying drawings, the manoeuvring member 30 is movable in rotation about the central axis X and the first rotation direction of the manoeuvring member 30 corresponds to an anticlockwise direction, while the second rotation direction corresponds to a clockwise direction.

Each connecting lever 40 is pivoted by its first end at a hinge point made directly on the manoeuvring member 30, and by its second end 40b to a respective slider 20 so that the latter slides along the groove 11a of the respective arm 11.

Advantageously, the fact that the connecting levers 40 are connected directly to the manoeuvring member 30 without any interposed parts considerably simplifies the operation of the clamp 100.

The absence of interposed parts (such as, for example, a kinematic gear chain) between the manoeuvring member 30 and the connecting levers 40 simplifies the assembly and maintenance of the clamp 100 and reduces its overall weight and associated costs.

To move the manoeuvring member 30, the clamp 100 also comprises a handgrip 60 which is integral with the manoeuvring member 30 and which can be gripped by a user to move the manoeuvring member 30 directly, for example, in rotation about the central axis X.

In this situation, unlike prior art clamps, a movement of the handgrip 60 corresponds directly to a movement of the manoeuvring member 30 and a sliding action of the sliders 20 without any kinematic chain of transmission parts such as toothed wheels or gears being interposed between the handgrip 60 and the sliders 20.

This aspect is advantageous because it makes the clamp 100 simple in structure, light in weight and dependable in use.

According to an aspect of this disclosure, the handgrip 60 is mounted eccentrically about the central axis X. This aspect is particularly advantageous because it allows the handgrip 60 to be held easily and conveniently by the user. In an embodiment, the handgrip 60 is perpendicular to, and preferably incident upon, the central axis X. Furthermore, the position of the handgrip 60 relative to the central axis X is such that the handgrip 60 does not hamper the movement of the connecting levers 40 and of the sliders 20.

In a possible embodiment, the handgrip 60 is made in the form of a knob.

Alternatively, the handgrip 60 comprises a rod made in one piece with the manoeuvring member 30 and extending away from it. Looking in more detail, the rod has a first end that is integrated in the manoeuvring member 30 and a second end that extends radially from the central axis X. The second end might be covered with a non-slip material, such as rubber, for example, to make it easier for an operator to hold the handgrip 60.

In another embodiment, the handgrip 60 comprises a rod that is applied to the manoeuvring member 30 in such a way that its first end is integral with the manoeuvring member 30 itself and its second end extends radially from the central axis X. The second end might be covered with a non-slip material, such as rubber, for example, to make it easier to hold the handgrip 60.

Advantageously, the fact that the handgrip 60 comprises a rod makes it easier and more convenient to rotate the manoeuvring member 30, particularly when the clamp 100 is being applied to the tyre P, because it acts as a lever.

More in detail, for the clamp 100 to be held securely on the tyre P, the manoeuvring member 30 continues to move (in the embodiment shown in the accompanying drawings, to rotate) in the first direction even after the sliders 20 have come into contact with the tyre P. In effect, in this situation, it is important that the sliders 20 do not simply abut up against the tyre tread B with their side abutment surfaces 20a but press hard against it so as to ensure that the clamp 100 has a firm grip on the tyre P.

In this situation, the fact that the handgrip 60 comprises a rod whose second end can be conveniently held by the operator makes it easier to continue moving the manoeuvring member 30 even after the side abutment surface 20a has come into contact with the tyre tread B. Thus, the operator is able to overcome easily and conveniently at least some of the elastic resistance of the tyre tread B, thereby forcing the sliders 20 to adhere to the tyre tread B and ensuring that the clamp 100 gets a firm grip on the tyre P.

In a possible embodiment, the rod is foldable. In this embodiment, the rod has a first portion which extends from the first end and a second portion which extends from the second end and which is connected to the first portion by a hinge element; that way, when the manoeuvring member 30 stops being rotated, the rod can be folded so it occupies less space. Alternatively, the rod is telescopic and can be extended to allow the operator to grip the handgrip 60 when the manoeuvring member 30 needs to be rotated, and retracted when the manoeuvring member 30 does not need to be turned.

To further facilitate placing the clamp 100 on the tyre P, the clamp 100 comprises an additional handgrip 61, connected to the clamp body 10 and positioned in a plane containing one of the arms 11 and the central axis X. According to an aspect of this disclosure, the additional handgrip 61 is applied directly to one of the arms 11.

In a possible embodiment, the additional handgrip 61 is cantilevered to the end of the arm 11 so that it juts out from the arm 11 and can be easily gripped by the operator.

In use, therefore, when the clamp 100 needs to be applied to the tyre P, the operator grips the handgrip 60 and the additional handgrip 61 to orient the clamp 100 so that the arm 11 with the additional handgrip 61 on it is vertical relative to the ground (Figure 1A).

Next, the operator moves the manoeuvring member 30 in the second direction so as to move the second end 40b of each connecting lever 40 away from the central axis X. In this situation, the sliders 20 are moved simultaneously towards the extracted position so as to occupy a position that is radially spaced from the central axis X by a distance greater than that between the axis of rotation of the tyre and the tyre tread B (Figure 1B).

If the sliders 20 at the extracted position are not spaced far enough apart to allow the clamp 100 to move close to the tyre P, the operator can extract the auxiliary portion 22 of each slider 20 from the respective engagement portion 21 so as to obtain a sort of extension of each arm 11. Next, the clamp 100 is moved up to the tyre P so that one of the sliders 20 abuts against an upper portion of the tyre tread B or the central axis X lies along the axis of rotation of the tyre P and the front abutment surface 20b of each slider 20 is in contact with the sidewall of the tyre P.

In this situation, using the additional handgrip 61 to hold the clamp 100 in contact with the tyre P, the operator uses the handgrip 60 to move the manoeuvring member 30 in the first direction.

In the case where the manoeuvring member 30 is rotatably connected to the clamp body 10, the handgrip 60 is moved progressively closer to the additional handgrip 61 so the second ends 40b of the connecting levers 40 move closer to the central axis X, thereby causing the sliders 20 to slide simultaneously along the respective arms 11 towards the retracted position (Figures 1A and 5).

In a preferred embodiment, the handgrip 60, when it is moved in order to operate manoeuvring member 30, describes an angle of rotation α (measured from the additional handgrip 61) less than or equal to 90°. As clearly shown in Figures 1A and 1B, the handgrip 60 describes a first angle less than or equal to 90° relative to the additional handgrip when the sliders 20 are at the extracted position, whereas, during the passage of the sliders 20 towards the retracted position (Figure 1A), the handgrip 60 is moved closer to the additional handgrip 61 and the angle of rotation α is progressively reduced until the handgrip 60 and the additional handgrip 61 make between them a second angle smaller in size than the first angle.

This aspect is advantageous because it makes the clamp 100 particularly ergonomic. To move the sliders 20 from the extracted position to the retracted position, and vice versa, the operator only has to rotate the handgrip 60 by an angle smaller than 90°, which means the operator does not have to exert much physical effort and makes using the clamp 100 easier.

The sliders 20 stop moving towards the retracted position when the side abutment surfaces 20a of the sliders 20 abut up against the tread B of the tyre P and apply pressure on it so as to securely tighten the clamp 100 around the tyre P.

To enable the sliders 20 to remain at the position reached after moving the manoeuvring member 30 in the first direction (that is to say, to allow the sliders 20 to keep their hold on the tyre P) by applying pressure on the tread B, the clamp 100 comprises a locking device 50.

More specifically, the locking device 50 is movable between a locked position, where it acts on the manoeuvring member 30 to prevent it from moving in the second direction, and an unlocked position, where it allows the manoeuvring member 30 to move in the first and second directions.

In other words, when the clamp 100 is applied to the tyre P and the sliders 20 are gripping the tyre tread B, the locking device 50 is configured to prevent the sliders 20 from unwantedly slipping towards the extracted position and thus from releasing the clamp 100 from the tyre P.

The locking device 50 thus prevents the sliders 20 from slackening their grip on the tyre P on account of an elastic return force applied by the tyre P itself on the sliders 20.

In use, therefore, once the manoeuvring member 30 has been moved (rotated, for example) in the first direction to bring the sliders 20, specifically their side abutment surfaces 20a, into abutment against the tyre tread B, the operator moves the locking device 50 to the locked position to prevent the manoeuvring member 30 from moving in the second direction and thus stopping the sliders 20 from slipping towards the extracted position.

In a possible embodiment, shown in Figure 1A, the locking device 50 comprises a braking element 50a which, at the locked position, is configured to apply a locking pressure on the manoeuvring member 30 by means of a vice.

The braking element 50a thus acts on the manoeuvring member 30 like a disc brake, where the vice holds the manoeuvring member 30 in place and stops it from unwantedly moving.

Alternatively, as shown in Figures 3A and 3B, the locking device 50 comprises a stop tooth 50b, for example, a pawl, which is configured, when it is at the locked position, to stop the manoeuvring member 30 from moving in the second direction.

Looking in more detail, in this embodiment, the manoeuvring member 30 has an outer toothed profile 30a which is engaged by the stop tooth 50b to stop the manoeuvring member 30 from moving (in the case of the embodiment illustrated, from rotating).

In a possible embodiment, the entire outer profile 30a of the manoeuvring member 30 is toothed.

Alternatively, only part of the outer profile 30a of the manoeuvring member 30 is toothed, as shown, for example, in Figure 3A.

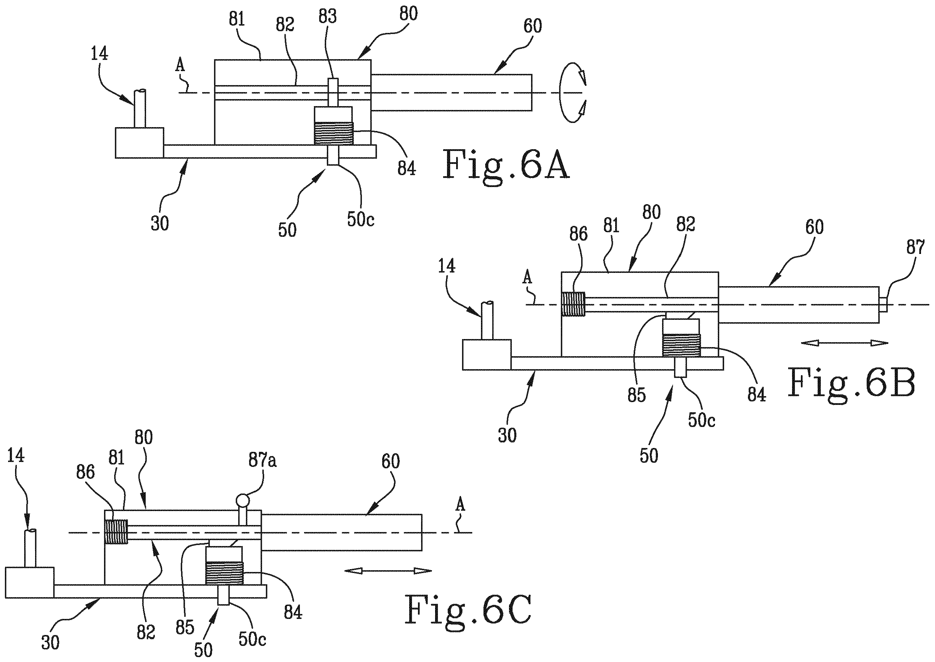

According to an aspect of this disclosure, the locking device 50, at the locked position, prevents the manoeuvring member 30 from moving in the second direction but allows it to move in the first direction. This aspect is advantageous because it enables the sliders 20 to be pressed even harder against the tyre P even if the locking device 50 is at the locked position, thereby ensuring that the clamp 100 firmly grips the tyre P. According to a further aspect of this disclosure, as shown in Figures 6A-6D, the locking device 50 might comprise a pin 50c operatively insertable into a hole of a plurality of holes. For example, the pin 50c is movably associated with the manoeuvring member 30, whilst the holes are made in the clamp body 10 or in a plate that is integral therewith. The pin 50c is movable in translation between a spaced-apart position, where the pin 50c is distal from the manoeuvring member 30 to create the unlocked position of the locking device 50, and a close-together position, where the pin 50c is at least partly inserted in a recess of a plurality of recesses made in the clamp body 10 to create the locked position.

Alternatively, the locking device 50 might comprise a pin 50c that is movably associated with the clamp body 10 and is insertable into recesses made in the manoeuvring member 30. Alternatively, the recesses are made on a fixed auxiliary disc 31 interposed between the clamp body 10 and the manoeuvring member 30. When the manoeuvring member 30 is locked, the pin 50c is brought to the close-together position so it is inserted into one of the recesses under it.

In a possible embodiment, the recesses are angularly distributed around the central axis X.

Alternatively, the recesses are made in a circular sector defined by the angle of rotation α described by the handgrip 60 to take the sliders 20 from the extracted position to the retracted position, and vice versa.

In use, therefore, the manoeuvring member 30 is moved using the handgrip 60 to make the sliders 20 slide towards the tyre tread B. Once the side abutment surfaces 20a of the sliders 20 are pressed against the tyre tread B, the pin 50c is actuated and moves in translation from the spaced apart position to the close-together position to be inserted into a recess under it. The position of the manoeuvring member 30 is thus fixed by the pin 50c, which prevents it from moving.

To switch the locking device 50 between the locked and the unlocked position, the clamp 100 comprises an actuating mechanism 80, operatively connected to the locking device 50 and operable by the user.

In a possible embodiment, the actuating mechanism 80 includes a control member 80a, for example, a lever or a button or a movable knob, operable by the user with the hand that is holding the additional handgrip 61.

An example is shown in Figure 1A, where the braking element 50a is actuated by a lever positioned near the additional handgrip 61 and connected to the braking element 50a by a connecting cable.

In use, therefore, to actuate the braking element 50a, it is sufficient for the operator to operate the lever (for example, by pressing it towards the additional handgrip 61) using the hand that is holding the additional handgrip 61 itself, thus preventing the manoeuvring member 30 from rotating.

With regard to the configuration where the control member 80a is in the form of a lever, there are, for example, two possible methods of actuating the lever which are opposite in their operating logic.

In a first actuating method, at its default position (at rest), the brake (like a bicycle brake) is inactive and can be applied by operating on the lever, which can then be locked at the braking position using a mechanical catch.

In a second actuating method, at its default position (at rest), the brake is locked and the lever must be operated on to enable the manoeuvring member 30 to be moved. The second actuating method would appear to have some practical advantages (when the correct position is reached, the user can simply let go of the brake to hold the clamp at the correct position).

In a possible embodiment, once the lever has been brought to an actuating position (that is to say, once it has been brought towards the additional handgrip 61) in order to activate the braking element 50a, the lever is held at that actuating position by a mechanical catch (for example, a metal slot). In this situation, the lever keeps the braking element 50a locked on the manoeuvring member 30. When the braking element 50a is released, the mechanical catch is inactivated (or disengaged) relative to the lever and the lever thus returns to a rest position (that is to say, a position distal from the additional handgrip 61) so as to release the braking element 50a to allow the manoeuvring member 30 to move (for example, rotate) freely.

Alternatively, when the lever is at the rest position, it might keep the braking element 50a locked on the manoeuvring member 30. In this situation, when the manoeuvring member 30 has to be set in motion, the lever is moved to the actuating position which, in this case, corresponds to a position where the lever releases the braking element 50a so as to allow the manoeuvring member 30 to move.

This embodiment allows improving the grip that the clamp 100 has when it is in position on the tyre P.

In a further possible embodiment, the actuating mechanism 80 can be operated manually by the operator after moving the manoeuvring member 30 in the first direction. In this situation, the operator holds the additional handgrip 61 with one hand and with the other hand, activates the actuating mechanism 80 using the control member 80a.

An example of this is the embodiment shown in Figure 3B, where the stop tooth 50b is actuated manually by the operator placing a hand directly on a knob which is connected to the stop tooth 50b by a connecting bar and which acts as control member 80a such that moving the knob causes the stop tooth 50b to engage one of the teeth of the manoeuvring member 30. Another example of this is shown in Figure 3A, where the stop tooth 50b is actuated manually by the operator placing a hand on a knob which is made on the clamp body 10 and which acts as a control member 80a such that rotating the knob causes the stop tooth 50b to move.

Alternatively, the actuating mechanism 80 can be operated manually by the operator operatively holding the handgrip 60.

In this situation, the operator operatively grips the handgrip 60 and moves the manoeuvring member 30 in the first direction to bring the sliders 20 into contact with the tyre P. Then, by continuing to hold the handgrip 60, the operator can activate the actuating mechanism 80 to move the locking device 50 to the locked position.

According to a possible aspect of this disclosure, the handgrip 60 itself constitutes the control member 80a to activate the actuating mechanism 80 of the locking device 50. In this situation, the handgrip 60 is moved (for example, rotated, lifted or lowered) in order to drive the actuating mechanism 80 to activate the locking device 50.

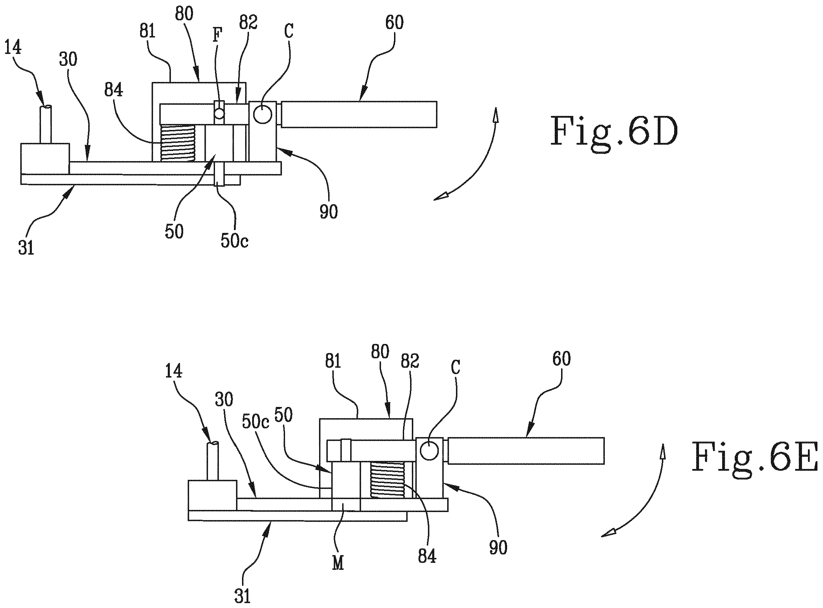

Examples of embodiments where the handgrip 60 itself constitutes the control member 80a are shown in Figures 6A, 6D and 6E.

In these embodiments, by way of non-limiting example, the locking device 50 is embodied as a pin 50c which is integral with the manoeuvring member 30 and movable in translation between the spaced-apart position and the close-together position (corresponding to the unlocked and locked positions) where it is extracted from or inserted into a respective recess (made on the clamp body 10 or on the auxiliary disc 31) thanks to the command imparted to the actuating mechanism 80 by the operator's hand holding the handgrip 60.

With reference to Figure 6A, the actuating mechanism 80 comprises a containing body 81 made on the manoeuvring member 30 to protect the pin 50c.

The actuating mechanism 80 also comprises a connecting bar 82 extending into the containing body 81 radially to the central axis X and, more specifically, along a direction defined by an axis of extension A of the handgrip 60.

The connecting bar 82 is rotatable about the axis A and one end of it is configured to engage the handgrip 60 in such a way that the latter rotates as one with the connecting bar 82.

In this situation, rotating the handgrip 60 causes the connecting bar 82 to rotate also.

The actuating mechanism 80 also comprises an eccentric 83 (or a variable radius cam) fitted to the connecting bar 82 and disposed above the pin 50c. The eccentric 83 is configured to impart a thrust force by which the pin 50c is pushed towards the close-together position.

The actuating mechanism 80 also comprises an opposing spring 84 interposed between the eccentric 83 and the pin 50c and configured to cause the pin 50c to spring back to the spaced-apart position when the eccentric 83 stops applying the thrust force on it.

In use, therefore, the operator grips the handgrip 60 and moves the manoeuvring member 30 (for example, by rotating it about the central axis) so as to bring the sliders 20 into contact with the tyre tread B.

To lock the sliders 20 at that position, the operator, with the hand still operatively holding the handgrip 60, rotates the handgrip 60 about its axis of extension A, thereby activating the actuating mechanism 80 and causing the pin 50c to pass from the spaced-apart position to the close-together position where it locks the manoeuvring member 30.

Looking in more detail, rotating the handgrip 60 causes the connecting bar 82 to rotate as one therewith. In this situation, the eccentric 83 fitted thereon is rotated and presses the pin 50c in such a way as to cause it to move translationally from the spaced-apart position to the close-together position where it is inserted into one of the recesses to prevent unwanted movement of the manoeuvring member 30 which would slacken the grip of the clamp 100 on the tyre P.

To remove the clamp 100 from the tyre P, the operator rotates the handgrip 60 in the direction opposite to the previous direction. In this situation, the eccentric 83 rotates as one with the connecting bar 82, thereby interrupting the thrusting action applied on the pin 50c. Thanks to the opposing spring 84, the pin 50c is returned to the spaced-apart position, where it is outside the recess. In this situation, the manoeuvring member 30 is free to move in the second direction to cause the sliders 20 to slide towards the extracted position, allowing the clamp 100 to be removed from the tyre P.

In this embodiment, therefore, the handgrip 60 itself constitutes the control member 80a to activate the actuating mechanism 80, hence the locking device 50 constituted by the pin 51c.

Another embodiment in which the handgrip 60 constitutes the control member 80a is shown in Figure 6D.

In this embodiment, the actuating mechanism 80 comprises a connecting bar 82 extending radially to the central axis X between a first and a second end.

The first end is integral with the handgrip 60, whilst the second end is operatively connected to an opposing spring 84 extending away from the manoeuvring member 30 and configured to be compressed or extended when the connecting bar 82 is moved.

At a hinge point C located between the first and the second end, the connecting bar 82 is also hinged to a support 90 which is integral with the manoeuvring member 30 and which, when the handgrip 60 is tilted, performs a tilting movement between a rest position, where the connecting bar 82 is rotated in such a way that the second end compresses the opposing spring 84, and an active position, where the connecting bar 82 is parallel with the manoeuvring member 30 and does not compress the opposing spring 84.

In this embodiment, the pin 50c is pivoted to the connecting bar 82 at a pivot point F between the hinge point C and the first end so that the tilting movement of the connecting bar 82 corresponds to the translational movement of the pin 50c between the close-together position and the spaced-apart position.

More specifically, when the connecting bar 82 is at the rest position, the pin 50c is at the spaced-apart position, whereas, when the connecting bar 82 is at the active position, the pin 50c is at the close-together position.

In use, therefore, the operator grips the handgrip 60 and tilts it so that the connecting bar 82 is tilted towards the rest position. In this situation, the first end of the connecting bar 82 compresses the opposing spring 84 and the pin 50c is moved to the spaced-apart position, that is to say, outside the recess so that the manoeuvring member 30 can be rotated in the first direction to move the sliders 20 into contact with the tyre tread B.

The operator keeps the handgrip 60 at this position for as long as the manoeuvring member 30 needs to be moved in the first direction.

To lock the sliders 20 in position after the sliders 20 have come into contact with the tyre tread B, the operator releases the handgrip 60 so the connecting bar 82 is tilted to the active position. In effect, in this situation, the first end of the connecting bar 82 is pushed by the opposing spring 84 and the pin 50c is moved in translation to the close-together position where it is inserted into one of the recesses to prevent unwanted movement of the manoeuvring member 30 which would lead to the clamp 100 slackening its hold on the tyre P.

Alternatively, as shown in Figure 6E, to avoid the need for the operator to have to hold the connecting bar 82, hence the handgrip 60, at the rest position for as long as the manoeuvring member 30 needs to be moved in the first direction, the pin 50c is inserted fixedly into the first end of the connecting bar 82, while the opposing spring 84 is interposed between the first end of the connecting bar 82 and the hinge point C.

In this embodiment, the bottom of each recesses (whether it is made on the auxiliary disc 31 or on the clamp body 10) is provided with a magnet M which magnetically attracts the pin 50c. In this situation, unlike what is described above with regard to the embodiment of Figure 6D, the connecting bar 82 is at the active position when it is rotated in such a way that its first end moves the pin 50c near the magnet M in the recess, whilst it is at the rest position when it is disposed in parallel with the manoeuvring member 30 so the pin 50c is clear of the magnet M.

In use, therefore, the operator grips the handgrip 60 and keeps it parallel to the manoeuvring member 30, that is to say, keeping the connecting bar 82 at the rest position.

The operator keeps the handgrip 60 at this position for as long as the manoeuvring member 30 needs to be moved in the first direction so the sliders 20 are brought into contact with the tyre tread B.

To lock the sliders 20 at this position, the operator tilts the handgrip 60 so the connecting bar 82 is tilted to the active position. In this situation, the first end of the connecting bar 82 carries the pin 50c to the close-together position where it is inserted into one of the recesses. By so doing, the pin 50c is held inside the recess by the magnetic retaining action applied by the magnet M in the recess.

Advantageously, actuating the locking device 50 by activating the actuating mechanism 80 using the handgrip 60 directly makes fitting the clamp 100 to the tyre P even more simple, practical and fast.

Alternatively to the embodiments described above, where the handgrip 60 itself constitutes the control member 80a, the control member 80a might be made in proximity to the handgrip 60 so that the operator can activate it while keeping one hand on the handgrip.

Examples of embodiments where the control member 80a is made in proximity to (or on) the handgrip 60 so that it can be activated while the operator keeps one hand on the handgrip 60 are shown in Figures 6B and 6C.

In these embodiments, by way of non-limiting example, the locking device 50 is embodied as a pin 50c which is integral with the manoeuvring member 30 and movable in translation between the spaced-apart position and the close-together position (corresponding to the unlocked and locked positions) where it is extracted from or inserted into a respective recess (made on the clamp body 10 or on the auxiliary disc 31) thanks to the command imparted to the actuating mechanism 80 by the operator's hand holding the handgrip 60.

With reference to Figure 6B, the actuating mechanism 80 comprises a containing body 81 and a connecting bar 82 extending into the containing body 81 radially to the central axis X.

The actuating mechanism 80 also comprises a wedge 85 which is mounted integrally with the connecting bar 82 and which is configured to press down on the pin 50c from above to cause it to move translationally towards the close-together position.

The actuating mechanism 80 also comprises an opposing spring 84 interposed between the wedge 85 and the pin 50c and configured to cause the pin 50c to spring back to the spaced-apart position.

The actuating mechanism 80 also comprises an elastic element 86, for example, a spring, applied to a wall of the containing body 81 and configured to come into abutment against a first end of the connecting bar 82.

The actuating mechanism 80 also comprises a release button 87 made on the handgrip 60 and operatively associated with a second end of the connecting bar 82, opposite to the first end, to move the bar translationally along its axis of extension A between a rest position, where the first end of the connecting bar 82 compresses the elastic element 86 and the wedge 85 is beside the pin 50c so the latter is at the spaced-apart position, and an active position, where the first end of the connecting bar 82 is distal from the elastic element 86 and the wedge 85 is above the pin 50c so as to push down on the latter so it adopts the close-together position.

In use, therefore, the operator holds the handgrip 60 and keeps the release button 87 pressed with one finger so as to keep the connecting bar 82 at the rest position. In this situation, the pin 50c is at the spaced-apart position and the manoeuvring member 30 can be rotated in the first direction to bring the sliders 20 into contact with the tyre tread B.

To lock the sliders 20 at this position, the operator lets go of the release button 87 so the connecting bar 82 moves translationally to the active position. In this situation, the elastic element 86 is released and the wedge 85 is positioned above the pin 50c which is thus made to move translationally from the spaced-apart position to the close-together position where it is inserted into one of the recesses to prevent unwanted movement of the manoeuvring member 30 which would slacken the grip of the clamp 100 on the tyre P.

To remove the clamp 100 from the tyre P, the operator presses the release button 87 again so the connecting bar 82 moves translationally to the rest position. In this situation, the wedge 85 does not operate on the pin 50c which, thanks to the opposing spring 84, is returned to the spaced-apart position, where it is outside the recess. The manoeuvring member 30 is thus free to move in the second direction to cause the sliders 20 to slide towards the extracted position, allowing the clamp 100 to be removed from the tyre P.

As shown in Figure 6C, instead of the release button 87, the actuating mechanism 80 might comprise a knob 87a movable translationally by the operator in such a way as to cause the connecting bar 82 to move translationally between the active position and the rest position. Advantageously, actuating the locking device 50, such as the pin 50c, for example, by activating the handgrip 60 or using a control member 80a located in proximity thereto, makes fitting the clamp 100 to the tyre P even more simple, practical and fast.

Also an object of this invention is a method for applying a clamp 100 to a vehicle wheel. The method comprises a step of preparing a clamp 100 comprising a body 10 including a plurality of arms 11 disposed radially around a central axis X.

The clamp 100 also comprises a plurality of sliders 20 slidably coupled to the arms 11 to move radially between a retracted position, where they are proximal to the central axis X, and an extracted position, where they are distal from the central axis X.

In a possible embodiment, each arm 11 comprises a groove 11a configured to guide the sliding movement of a respective slider 20.

The clamp 100 also comprises an manoeuvring member 30, connected to the sliders 20 by a plurality of connecting levers 40 and also connected to the clamp body 10.

In a possible embodiment, the manoeuvring member 30 is rotatably connected to the clamp body 10 to rotate about the central axis X. Alternatively, the manoeuvring member 30 is movable translationally relative to the clamp body 10.

In a possible embodiment, the manoeuvring member 30 is embodied as a disc, while the connecting levers 40 are in the form of links or rods.

The manoeuvring member 30 is connected to the clamp body 10 to move in a first direction to bring the sliders 20 towards the retracted position and in a second direction, opposite to the first direction, to bring the sliders 20 towards the extracted position.

At the extracted position, the sliders 20 are further away from the central axis X than they are when they are at the retracted position.

The clamp 100 also comprises a handgrip 60 which is integral with the manoeuvring member 30 and which can be gripped by a user to move the manoeuvring member 30.

More in detail, moving the manoeuvring member 30 using the handgrip 60 directly causes the sliders 20 to slide simultaneously along the respective arms 11. In effect, the connecting levers 40 are hinged directly to the manoeuvring member 30 without interposed parts such as toothed elements, ring nuts and the like.

In a possible embodiment, the clamp 100 also comprises an additional handgrip 61 which is integral with one of the arms 11 and which is positioned in a plane containing one of the arms 11 and the central axis X. The clamp 100 also comprises a locking device 50 which is movable between a locked position, where it prevents the manoeuvring member 30 from moving in the second direction, and an unlocked position, where it allows the manoeuvring member 30 to move in the first and second directions.

In the embodiment illustrated, since the manoeuvring member 30 is movable in rotation about the central axis X, the locking device 50 is movable between a locked position, where it prevents the manoeuvring member 30 from rotating in the second rotation direction, and an unlocked position, where it allows the manoeuvring member 30 to rotate in the first and second rotation directions.

The locking device 50 may be made in different ways and may, for example, comprise a braking element 50a configured to apply a locking pressure on the manoeuvring member 30.

Alternatively, the locking device 50 may comprise a stop tooth 50b configured to stop in abutment against a respective tooth of a toothed profile made on the manoeuvring member 30.

Alternatively, the locking device 50 may comprise a pin 50c which is movable in translation to be inserted into one of the recesses made in the clamp body 10 and/or in an auxiliary disc 31 which is interposed between the clamp body 10 and the manoeuvring member 30.

The locking device 50 may also comprise an actuating mechanism 80 configured to operate on the locking device 50 to move it from the unlocked to the locked position.

According to an aspect of this disclosure, the actuating mechanism 80 is controlled by a control member 80a which is activated manually by the user with the hand that is operatively holding the additional handgrip 61 connected to the clamp body 10.

Alternatively, the actuating mechanism 80 is controlled by a control member 80a which is activated manually by the operator with the hand that is operatively holding the handgrip 60 or by the operator releasing the handgrip 60.

Alternatively, the control member 80a and the handgrip 60 may be one and the same part, meaning that moving the handgrip drives the actuating mechanism 80 to activate the locking device 50.

After the step of preparing the clamp 100, the method comprises a step of directly moving the manoeuvring member 30.

In a possible embodiment, the manoeuvring member 30 is moved translationally. Alternatively, the movement may be roto-translational.

In the embodiment illustrated, directly moving the manoeuvring member 30 is accomplished by rotation in the second rotation direction, by operating on the handgrip 60, in order to move the sliders 20 towards the extracted position. In this situation, the locking device 50 is at the unlocked position to allow the sliders 20 to move along the respective arms 11.

In other words, the sliders 20 are brought to the extracted position so their position on the arms 11 is at a radial distance from the central axis X which is greater than the distance between the centre of the tyre P and its tread B.

Next, the method comprises a step of moving the clamp 100 close to the vehicle wheel.

The clamp 100 is moved close to the tyre P in such a way that the arm 11 with the additional handgrip 61 on it is vertical to the ground. In this situation, the slider 20 corresponding to the arm 11 which is disposed vertically is located in proximity to the tyre tread B.

Looking in more detail, the clamp 100 is moved close to the tyre P so that each slider 20, with its side abutment surface 20a, abuts up against a corresponding part of the tread B of the tyre P.

In an embodiment, the clamp 100 is moved close to the tyre P so that each slider 20 abuts up against a sidewall of the tyre P with a corresponding front abutment surface 20b, transverse to the side abutment surface 20a.

Advantageously, the side abutment surface 20a acts as a shim which prevents contact between the arms 11 and the wheel rim.

Once the clamp 100 has been moved up to the tyre P, the method comprises a step of actuating the manoeuvring member 30 in the first direction, for example in rotation, using the handgrip 60 in order to move the sliders 20 simultaneously towards the retracted position.

In the case where the manoeuvring member 30 is movable in rotation, the operator rotates the manoeuvring member 30 by moving the handgrip 60 close to the additional handgrip 61 so that the sliders 20 move progressively and simultaneously. By so doing, the side abutment surface 20a of each slider 20 comes into firm contact with the tread B of the tyre P and applies thereon a gripping pressure which allows it to hold the clamp 100 on the tyre P.

Advantageously, the fact that the sliders 20 move simultaneously along the respective arms 11 allows the clamp 100 to self-centre when it is being applied on the tyre P.

Once the sliders 20 have been brought into contact with the tyre tread B, to hold the sliders 20 in place and prevent the clamp 100 from slackening its hold on account of the elastic return of the tyre P, the method comprises a step of moving the locking device 50 from the unlocked position to the locked position. In this situation, the manoeuvring member 30 is unable to move in the second direction and thus the sliders 20 are prevented from sliding towards the extracted position and the clamp 100 from slackening its grip.

As mentioned above, in a possible embodiment, the manoeuvring member 30 comprises an at least partly toothed outer profile 30a and the locking device 50 comprises a stop tooth 50b. In this situation, the step of activating comprises a sub-step of moving the stop tooth 50b in which the stop tooth 50b engages with a tooth of the outer toothed profile 30a.

In another possible embodiment, the locking device 50 comprises a braking element 50a. In this situation, the step of activating comprises a sub-step of tightening the braking element 50a on the manoeuvring member 30 so that the braking element 50a applies a locking pressure.

In another possible embodiment, the manoeuvring member 30 (or, where applicable, the clamp body 10 or an auxiliary disc 31 interposed between the clamp body 10 and the manoeuvring member 30) comprises a plurality of recesses and the locking device 50 comprises a pin that is movably associated with the clamp body 10 to move in translation between a spaced-apart position, where the pin is distal from the manoeuvring member 30 to create the unlocked position of the locking device 50, and a close-together position, where the pin is at least partly inserted in one of the recesses to create the locked position.

In this situation, the step of activating comprises a sub-step of inserting the pin 50 translationally into a recess of the manoeuvring member 30. Therefore, when the step of moving the manoeuvring member 30 in the first direction is over, the locking device 50 is activated and brought to the locked position.

According to a further aspect of this disclosure, the step of activating the locking device 50 also comprises a sub-step of actuating the control member 80a to activate the actuating mechanism 80 so that the locking device 50 moves from the unlocked position to the locked position.

More specifically, in this step, the control member 80a, which may be embodied, for example, as a button, a knob, a lever and the like, is actuated by the user when switching the locking device 50 from the unlocked position to the locked position.

According to an aspect of this disclosure, the locking device 50, at the locked position, is configured to allow the manoeuvring member 30 to move in the first direction. In this situation, the method comprises a further step of actuating the manoeuvring member 30 in the first direction with the handgrip 60 while the locking device 50 is at the locked position. By so doing it is possible to ensure that the sliders 20 grip the tyre P with a strong enough hold.

This invention achieves the preset aims and overcomes the disadvantages of the prior art.

The clamp 100 is light in weight thanks to the absence of kinematic chains of toothed parts.

The clamp 100 is handy to use thanks to the presence of the additional handgrip 61.

The clamp 100 is ergonomic in use and easy to apply to the tyre P.

## Claims

1. A clamp (100) applicable to a tyre (P) of a vehicle wheel and comprising:
- a body (10) including a plurality of arms (11) extending radially from a central axis (X) and angularly distributed about the central axis (X);
- a plurality of sliders (20), each slidably coupled to a respective arm (11) to move radially between a retracted position, where it is at a first distance from the central axis (X), and an extracted position, where it is at a second distance from the central axis (X), greater than the first distance, each slider (20) including a side abutment surface (20a), configured to abut against a tread (B) of the tyre (P);
- a single manoeuvring member (30) that is movably connected to the clamp body (10);
- a plurality of connecting levers (40), each connecting lever (40) having a first end that is articulated to the manoeuvring member (30) and a second end (40b) that is articulated to a corresponding slider (20) of the plurality of sliders (20) to allow the sliders (20) to move simultaneously so that a movement of the manoeuvring member (30) in a first direction corresponds to a movement of the sliders (20) towards the retracted position and a movement of the manoeuvring member (30) in a second rotation direction, opposite to the first direction, corresponds to a movement of the sliders (20) towards the extracted position;
- a locking device (50) that is movable between a locked position, where it acts on the manoeuvring member (30) to prevent it from moving in the second rotation direction, and an unlocked position, where it allows the manoeuvring member (30) to move in the first and second rotation directions, the clamp (100) being **characterized in that** it comprises a single handgrip (60) which is integral with said manoeuvring member (30) and configured to be gripped by a user to move the manoeuvring member (30) directly.

2. The clamp according to claim 1, wherein the manoeuvring member (30) is rotatably connected to the clamp body (10) to rotate about the central axis (X).

3. The clamp according to claim 2, wherein the handgrip (60) is disposed eccentrically relative to the central axis (X).

4. The clamp according to any one of the preceding claims, wherein the handgrip (60) comprises a rod having a first end that is integral with the manoeuvring member (30) and a second end that extends away from the central axis (X).

5. The clamp according to any one of the preceding claims, wherein the locking device (50) comprises a braking element (50a) which, at the locked position, is configured to apply a locking pressure on the manoeuvring member (30) by means of a vice.

6. The clamp according to any one of the preceding claims, wherein the manoeuvring member (30) comprises a plurality of recesses and wherein the locking device (50) comprises a pin (50c) that is movably associated with the clamp body (10) to move in translation between a spaced-apart position, where the pin (50c) is distal from the manoeuvring member (30) to create the unlocked position of the locking device (50), and a close-together position, where the pin (50c) is at least partly inserted in one of the recesses to create the locked position.

7. The clamp according to any one of the preceding claims, wherein the locking device (50), when it is at the locked position, is configured to allow the manoeuvring member (30) to move in the first direction, and wherein the manoeuvring member (30) comprises an outer toothed profile (30a) and wherein the locking device (50) comprises a stop tooth (50b), configured to engage with one of the teeth of the outer toothed profile (30a) when the locking device (50) is at the locked position.

8. The clamp according to any one of the preceding claims, comprising an additional handgrip (61), connected to the clamp body (10) and positioned in a plane containing one of the arms (11) and the central axis (X).

9. The clamp according to any one of the preceding claims, comprising
an actuating mechanism (80), connected to the locking device (50) and operable by the user to move the locking device (50) between the locked position and the unlocked position;
an additional handgrip (61), connected to clamp body (10), wherein the actuating mechanism (80) includes a control member (80a) that is operable manually by the user operatively holding the additional handgrip (61).

10. The clamp according to any one of the preceding claims, comprising a level, associated with the clamp body (10) and configured to indicate the slope of the clamp body (10) relative to a reference plane.

11. A method for applying a clamp (100) to a vehicle wheel, the method comprising the following steps:
- preparing a clamp (100) comprising:
a clamp body (10) including a plurality of arms (11) disposed radially around a central axis (X);
a plurality of sliders (20) slidably coupled to the arms (11) to move radially between a retracted position, where they are proximal to the central axis (X), and an extracted position, where they are distal from the central axis (X);
a single manoeuvring member (30) connected to the sliders (20) by a plurality of connecting levers (40), each connecting lever (40) having a first end that is articulated to the manoeuvring member (30) and a second end (40b) that is articulated to a corresponding slider (20) of the plurality of sliders (20) to allow the sliders (20) to move simultaneously so that a movement of the manoeuvring member (30) in a first direction corresponds to a movement of the sliders (20) towards the retracted position and a movement of the manoeuvring member (30) in a second rotation direction, opposite to the first direction, corresponds to a movement of the sliders (20) towards the extracted position;
a locking device (50), movable between a locked position, where it prevents the manoeuvring member (30) from rotating in the second rotation direction, and an unlocked position, where it allows the manoeuvring member 30 to rotate in the first and second rotation directions;
a single handgrip (60) which is integral with said manoeuvring member (30) and which can be gripped by a user to move the manoeuvring member (30) around the central axis (X);
- directly moving the manoeuvring member (30) in the second direction by using the handgrip (60) to move the sliders (20) towards the extracted position, with the locking device (50) at the unlocked position;
- moving the clamp (100) close to the vehicle wheel so that each slider (20), with a corresponding side abutment surface (20a), abuts up against a part of the tread (B) of the tyre (P);
- actuating the manoeuvring member (30) in the first direction, using the handgrip 60, in order to move the sliders (20) simultaneously towards the retracted position;
- moving the locking device (50) from the unlocked position to the locked position.

12. The method according to claim 11, wherein the manoeuvring member (30) is rotatably connected to the clamp body (10) to rotate about the central axis (X).

13. The method according to claim 11 or 12, wherein the locking device (50), when it is at the locked position, is configured to allow the manoeuvring member (30) to move in the first direction and wherein the method comprises a further step of actuating the manoeuvring member (30) in the first direction with the handgrip (60) while the locking device (50) is at the locked position.

14. The method according to claim 13, wherein the manoeuvring member (30) comprises an outer toothed profile (30a) and the locking device (50) comprises a stop tooth (50b), and wherein the step of activating comprises a sub-step of moving the stop tooth (50b) in which the stop tooth (50b) engages with a tooth of the outer toothed profile (30a).

15. The method according to any one of claims from 11 to 14, wherein moving the locking device (50) between the unlocked position and the locked position is accomplished by acting on an actuating mechanism (80) that is connected to the locking device (50), and . wherein the actuating mechanism (80) is controlled by a control member (80a) which is activated manually by the user with the hand that is operatively holding a second handgrip (61) connected to the clamp body (10).

## Patentansprüche

1. Klemme (100), anbringbar an einem Reifen (P) eines Fahrzeugrades und umfassend:
- einen Körper (10), einschließend eine Vielzahl von Armen (11), die sich radial von einer Mittelachse (X) erstrecken und winkelmäßig um die Mittelachse (X) verteilt sind;
- eine Vielzahl von Schiebern (20), die jeweils verschiebbar mit einem jeweiligen Arm (11) gekoppelt sind, um sich radial zwischen einer eingefahrenen Position, in der sie sich in einem ersten Abstand von der Mittelachse (X) befindet, und einer ausgefahrenen Position, in der sie sich in einem zweiten Abstand von der Mittelachse (X) befindet, der größer als der erste Abstand ist, zu bewegen, wobei jeder Schieber (20) eine Seitenanlagefläche (20a) einschließt, die dazu ausgelegt ist, an einer Lauffläche (B) des Reifens (P) anzuliegen;
- ein einzelnes Manövrierglied (30), das beweglich mit dem Klemmenkörper (10) verbunden ist;
- eine Vielzahl von Verbindungshebeln (40), wobei ein jeder Verbindungshebel (40) ein erstes Ende, das an dem Manövrierglied (30) angelenkt ist, und ein zweites Ende (40b) aufweist, das an einem entsprechenden Schieber (20) der Vielzahl von Schiebern (20) angelenkt ist, um es den Schiebern (20) zu ermöglichen, sich gleichzeitig zu bewegen, so dass eine Bewegung des Manövrierglieds (30) in einer ersten Richtung einer Bewegung der Schieber (20) in Richtung der eingefahrenen Position entspricht und eine Bewegung des Manövrierglieds (30) in einer zweiten Drehrichtung, die der ersten Richtung entgegengesetzt ist, einer Bewegung der Schieber (20) in Richtung der ausgefahrenen Position entspricht;
- eine Sperrvorrichtung (50), die zwischen einer gesperrten Position, in der sie auf das Manövrierglied (30) einwirkt, um zu verhindern, dass es sich in der zweiten Drehrichtung bewegt, und einer entsperrten Position bewegbar ist, in der sie es dem Manövrierglied (30) ermöglicht, sich in der ersten und zweiten Drehrichtung zu bewegen,
wobei die Klemme (100) **dadurch gekennzeichnet ist, dass** sie einen einzelnen Handgriff (60) umfasst, der einstückig mit dem Manövrierglied (30) ausgebildet und ausgelegt ist, um von einem Benutzer ergriffen zu werden, um das Manövrierglied (30) direkt zu bewegen.

2. Klemme nach Anspruch 1, wobei das Manövrierglied (30) drehbar mit dem Klemmenkörper (10) verbunden ist, um sich um die Mittelachse (X) zu drehen.

3. Klemme nach Anspruch 2, wobei der Handgriff (60) exzentrisch zur Mittelachse (X) angeordnet ist.

4. Klemme nach einem der vorhergehenden Ansprüche, wobei der Handgriff (60) eine Stange mit einem ersten Ende, das einstückig mit dem Manövrierglied (30) ist, und einem zweiten Ende, das sich von der Mittelachse (X) wegführend erstreckt, umfasst.

5. Klemme nach einem der vorhergehenden Ansprüche, wobei die Sperrvorrichtung (50) ein Bremselement (50a) umfasst, das in der gesperrten Position dazu ausgelegt ist, mittels eines Schraubstocks einen Sperrdruck auf das Manövrierglied (30) auszuüben.

6. Klemme nach einem der vorhergehenden Ansprüche, wobei das Manövrierglied (30) eine Vielzahl von Aussparungen umfasst und wobei die Sperrvorrichtung (50) einen Stift (50c) umfasst, der beweglich mit dem Klemmenkörper (10) assoziiert ist, um sich translatorisch zwischen einer beabstandeten Position, in der der Stift (50c) distal von dem Manövrierglied (30) ist, um die entsperrte Position der Sperrvorrichtung (50) zu erzeugen, und einer zusammengeführten Position, in der der Stift (50c) zumindest teilweise in eine der Aussparungen eingeführt ist, um die gesperrte Position zu erzeugen, zu bewegen.

7. Klemme nach einem der vorhergehenden Ansprüche, wobei die Sperrvorrichtung (50), wenn sie sich in der gesperrten Position befindet, ausgelegt ist, um es dem Manövrierglied (30) zu ermöglichen, sich in der ersten Richtung zu bewegen, und wobei das Manövrierglied (30) ein äußeres Zahnprofil (30a) umfasst und wobei die Sperrvorrichtung (50) einen Arretierzahn (50b) umfasst, der ausgelegt ist, um mit einem der Zähne des äußeren Zahnprofils (30a) in Eingriff zu treten, wenn sich die Sperrvorrichtung (50) in der gesperrten Position befindet.

8. Klemme nach einem der vorhergehenden Ansprüche, umfassend einen zusätzlichen Handgriff (61), der mit dem Klemmenkörper (10) verbunden ist und in einer Ebene positioniert ist, die einen der Arme (11) und die Mittelachse (X) enthält.

9. Klemme nach einem der vorhergehenden Ansprüche, umfassend:
einen Betätigungsmechanismus (80), der mit der Sperrvorrichtung (50) verbunden und durch den Benutzer betätigbar ist, um die Sperrvorrichtung (50) zwischen der gesperrten Position und der entsperrten Position zu bewegen;
einen zusätzlichen Handgriff (61), der mit dem Klemmenkörper (10) verbunden ist, wobei der Betätigungsmechanismus (80) ein Steuerglied (80a) einschließt, das durch den Benutzer manuell betätigbar ist, indem er den zusätzlichen Handgriff (61) betriebsbereit hält.

10. Klemme nach einem der vorhergehenden Ansprüche, umfassend eine Ebene, die mit dem Klemmenkörper (10) assoziiert und dazu ausgelegt ist, die Neigung des Klemmenkörpers (10) relativ zu einer Referenzebene anzugeben.

11. Verfahren zum Anbringen einer Klemme (100) an einem Fahrzeugrad, wobei das Verfahren die folgenden Schritte umfasst:
- Vorbereiten einer Klemme (100), umfassend:
einen Klemmenkörper (10), einschließend eine Vielzahl von Armen (11), die radial um eine Mittelachse (X) angeordnet sind;
eine Vielzahl von Schiebern (20), die verschiebbar an die Arme (11) gekoppelt sind, um sich radial zwischen einer eingefahrenen Position, in der sie proximal zu der Mittelachse (X) sind, und einer ausgefahrenen Position, in der sie distal von der Mittelachse (X) sind, zu bewegen;
ein einzelnes Manövrierglied (30), das durch eine Vielzahl von Verbindungshebeln (40) mit den Schiebern (20) verbunden ist, wobei ein jeder Verbindungshebel (40) ein erstes Ende, das an dem Manövrierglied (30) angelenkt ist, und ein zweites Ende (40b) aufweist, das an einem entsprechenden Schieber (20) der Vielzahl von Schiebern (20) angelenkt ist, um es den Schiebern (20) zu ermöglichen, sich gleichzeitig zu bewegen, so dass eine Bewegung des Manövrierglieds (30) in einer ersten Richtung einer Bewegung der Schieber (20) in Richtung der eingefahrenen Position entspricht und eine Bewegung des Manövrierglieds (30) in einer zweiten Drehrichtung, die der ersten Richtung entgegengesetzt ist, einer Bewegung der Schieber (20) in Richtung der ausgefahrenen Position entspricht;
eine Sperrvorrichtung (50), die zwischen einer gesperrten Position, in der sie verhindert, dass sich das Manövrierglied (30) in der zweiten Drehrichtung dreht, und einer entsperrten Position, in der sie ermöglicht, dass sich das Manövrierglied (30) in der ersten und zweiten Drehrichtung dreht, bewegbar ist; einen einzelnen Handgriff (60), der einstückig mit dem Manövrierglied (30) ausgebildet ist und von einem Benutzer ergriffen werden kann, um das Manövrierglied (30) um die Mittelachse (X) zu bewegen;
- direktes Bewegen des Manövrierglieds (30) in die zweite Richtung unter Verwendung des Handgriffs (60), um die Schieber (20) in Richtung der ausgefahrenen Position zu bewegen, wobei sich die Sperrvorrichtung (50) in der entsperrten Position befindet;
- Bewegen der Klemme (100) nahe an das Fahrzeugrad, so dass ein jeder Schieber (20) mit einer entsprechenden Seitenanlagefläche (20a) bis gegen einen Teil der Lauffläche (B) des Reifens (P) stößt;
- Betätigen des Manövrierglieds (30) in der ersten Richtung unter Verwendung des Handgriffs 60, um die Schieber (20) gleichzeitig in Richtung der eingefahrenen Position zu bewegen;
- Bewegen der Sperrvorrichtung (50) aus der entsperrten Position in die gesperrte Position.

12. Verfahren nach Anspruch 11, wobei das Manövrierglied (30) drehbar mit dem Klemmenkörper (10) verbunden ist, um sich um die Mittelachse (X) zu drehen.

13. Verfahren nach Anspruch 11 oder 12, wobei die Sperrvorrichtung (50), wenn sie sich in der gesperrten Position befindet, dazu ausgelegt ist, es dem Manövrierglied (30) zu ermöglichen, sich in der ersten Richtung zu bewegen, und wobei das Verfahren einen weiteren Schritt zum Betätigen des Manövrierglieds (30) in der ersten Richtung mit dem Handgriff (60) umfasst, während sich die Sperrvorrichtung (50) in der gesperrten Position befindet.

14. Verfahren nach Anspruch 13, wobei das Manövrierglied (30) ein äußeres Zahnprofil (30a) umfasst und die Sperrvorrichtung (50) einen Arretierzahn (50b) umfasst, und wobei der Schritt zum Aktivieren einen Unterschritt zum Bewegen des Arretierzahns (50b) umfasst, bei dem der Arretierzahn (50b) mit einem Zahn des äußeren Zahnprofils (30a) in Eingriff steht.

15. Verfahren nach einem der Ansprüche 11 bis 14, wobei das Bewegen der Sperrvorrichtung (50) zwischen der entsperrten Position und der gesperrten Position durch Einwirken auf einen Betätigungsmechanismus (80) erfolgt, der mit der Sperrvorrichtung (50) verbunden ist, und wobei der Betätigungsmechanismus (80) von einem Steuerglied (80a) gesteuert wird, das durch den Benutzer manuell mit der Hand aktiviert wird, die einen mit dem Klemmenkörper (10) verbundenen zweiten Handgriff (61) betriebsbereit hält.

## Revendications

1. Pince (100), applicable à un pneu (P) d'une roue de véhicule et comprenant :
- un corps (10), incluant une pluralité de bras (11) s'étendant radialement à partir d'un axe central (X) et répartis angulairement autour de l'axe central (X) ;
- une pluralité de coulisseaux (20), chacun couplé de manière coulissante à un bras (11) respectif pour se déplacer radialement entre une position rétractée, où il se trouve à une première distance de l'axe central (X), et une position extraite, où il se trouve à une seconde distance de l'axe central (X), supérieure à la première distance, chaque coulisseau (20) incluant une surface de butée latérale (20a), configurée pour venir se mettre en butée contre une bande de roulement (B) du pneu (P) ;
- un organe de manoeuvre (30) unique qui est relié de manière mobile au corps (10) de la pince ;
- une pluralité de leviers de raccordement (40), chaque levier de raccordement (40) comportant une première extrémité étant articulée à l'organe de manoeuvre (30) et une seconde extrémité (40b) étant articulée à un coulisseau (20) correspondant de la pluralité de coulisseaux (20) pour permettre aux coulisseaux (20) de se déplacer simultanément de sorte qu'un mouvement de l'organe de manoeuvre (30) dans un premier sens correspond à un mouvement des coulisseaux (20) vers la position rétractée et un mouvement de l'organe de manoeuvre (30) dans un deuxième sens de rotation, opposé au premier sens, correspond à un mouvement des coulisseaux (20) vers la position extraite ;
- un dispositif de verrouillage (50) étant mobile entre une position verrouillée, où il agit sur l'organe de manoeuvre (30) pour l'empêcher de se déplacer dans le second sens de rotation, et une position déverrouillée, où il permet à l'organe de manoeuvre (30) de se déplacer dans les premier et second sens de rotation,
la pince (100) étant **caractérisée en ce qu'**elle comprend une poignée (60) unique étant solidaire dudit organe de manoeuvre (30) et configurée pour être saisie par un utilisateur afin de déplacer directement l'organe de manoeuvre (30).

2. Pince selon la revendication 1, dans laquelle l'organe de manoeuvre (30) est relié de manière rotative au corps (10) de la pince pour tourner autour de l'axe central (X) .

3. Pince selon la revendication 2, dans laquelle la poignée (60) est disposée de manière excentrique par rapport à l'axe central (X).

4. Pince selon l'une quelconque des revendications précédentes, dans laquelle la poignée (60) comprend une tige comportant une première extrémité étant solidaire de l'organe de manoeuvre (30) et une seconde extrémité s'étendant en s'éloignant de l'axe central (X).

5. Pince selon l'une quelconque des revendications précédentes, dans laquelle le dispositif de verrouillage (50) comprend un élément de freinage (50a) qui, en position verrouillée, est configuré pour appliquer une pression de verrouillage sur l'organe de manoeuvre (30) au moyen d'un étau.

6. Pince selon l'une quelconque des revendications précédentes, dans laquelle l'organe de manoeuvre (30) comprend une pluralité de renfoncements et dans laquelle le dispositif de verrouillage (50) comprend un axe (50c) qui est associé de manière mobile au corps (10) de la pince pour se déplacer en translation entre une position espacée, où l'axe (50c) est distal de l'organe de manoeuvre (30) pour créer la position déverrouillée du dispositif de verrouillage (50), et une position rapprochée, où l'axe (50c) est au moins partiellement inséré dans l'un des renfoncements pour créer la position verrouillée.

7. Pince selon l'une quelconque des revendications précédentes, dans laquelle le dispositif de verrouillage (50), lorsqu'il se trouve en position verrouillée, est configuré pour permettre à l'organe de manoeuvre (30) de se déplacer dans le premier sens, et dans laquelle l'organe de manoeuvre (30) comprend un profil denté (30a) extérieur et dans laquelle le dispositif de verrouillage (50) comprend une dent d'arrêt (50b), configurée pour se mettre en prise avec l'une des dents du profil denté (30a) extérieur lorsque le dispositif de verrouillage (50) se trouve dans la position verrouillée.

8. Pince selon l'une quelconque des revendications précédentes, comprenant une poignée (61) supplémentaire, reliée au corps (10) de la pince et positionnée dans un plan contenant l'un des bras (11) et l'axe central (X).

9. Pince selon l'une quelconque des revendications précédentes, comprenant :
un mécanisme d'actionnement (80), relié au dispositif de verrouillage (50) et actionnable par l'utilisateur pour déplacer le dispositif de verrouillage (50) entre la position verrouillée et la position déverrouillée ;
une poignée (61) supplémentaire, reliée au corps (10) de la pince, dans laquelle le mécanisme d'actionnement (80) inclut un organe de commande (80a) qui peut être actionné manuellement par l'utilisateur tenant de manière fonctionnelle la poignée (61) supplémentaire.

10. Pince selon l'une quelconque des revendications précédentes, comprenant un niveau, associé au corps (10) de la pince et configuré pour indiquer l'inclinaison du corps (10) de la pince par rapport à un plan de référence.

11. Procédé d'application d'une pince (100) à une roue de véhicule, le procédé comprenant les étapes suivantes :
- préparer une pince (100), comprenant :
un corps (10) de pince, incluant une pluralité de bras (11) disposés radialement autour d'un axe central (X) ; une pluralité de coulisseaux (20) couplés de manière coulissante aux bras (11) pour se déplacer radialement entre une position rétractée, où ils sont proximaux de l'axe central (X), et une position extraite, où ils sont distaux de l'axe central (X) ;
un organe de manoeuvre (30) unique relié aux coulisseaux (20) par une pluralité de leviers de raccordement (40), chaque levier de raccordement (40) comportant une première extrémité qui est articulée à l'organe de manoeuvre (30) et une deuxième extrémité (40b) qui est articulée à un coulisseau (20) correspondant de la pluralité de coulisseaux (20) pour permettre aux coulisseaux (20) de se déplacer simultanément de sorte qu'un mouvement de l'organe de manoeuvre (30) dans un premier sens correspond à un mouvement des coulisseaux (20) vers la position rétractée et un mouvement de l'organe de manoeuvre (30) dans un second sens de rotation, opposé au premier sens, correspond à un déplacement des coulisseaux (20) vers la position extraite ;
un dispositif de verrouillage (50), mobile entre une position verrouillée, où il empêche l'organe de manoeuvre (30) de tourner dans le second sens de rotation, et une position déverrouillée, où il permet à l'organe de manoeuvre (30) de tourner dans les premier et second sens de rotation ;
une poignée (60) unique étant solidaire dudit organe de manoeuvre (30) et qui peut être saisie par un utilisateur pour déplacer l'organe de manoeuvre (30) autour de l'axe central (X) ;
- déplacer directement l'organe de manoeuvre (30) dans le deuxième sens en utilisant la poignée (60) pour déplacer les coulisseaux (20) vers la position extraite, avec le dispositif de verrouillage (50) en position déverrouillée ;
- déplacer la pince (100) à proximité de la roue du véhicule de manière à ce que chaque coulisseau (20), doté d'une surface de butée latérale (20a) correspondante, vienne se mettre en butée contre une partie de la bande de roulement (B) du pneu (P) ;
- actionner l'organe de manoeuvre (30) dans le premier sens, à l'aide de la poignée (60), afin de déplacer les coulisseaux (20) simultanément vers la position rétractée ;
- déplacer le dispositif de verrouillage (50) de la position déverrouillée à la position verrouillée.

12. Procédé selon la revendication 11, dans lequel l'organe de manoeuvre (30) est relié de manière rotative au corps (10) de la pince pour tourner autour de l'axe central (X).

13. Procédé selon la revendication 11 ou 12, dans lequel le dispositif de verrouillage (50), lorsqu'il est en position verrouillée, est configuré pour permettre à l'organe de manoeuvre (30) de se déplacer dans le premier sens et dans lequel le procédé comprend une étape supplémentaire consistant à actionner l'organe de manoeuvre (30) dans le premier sens avec la poignée (60) alors que le dispositif de verrouillage (50) se trouve en position verrouillée.

14. Procédé selon la revendication 13, dans lequel l'organe de manoeuvre (30) comprend un profil denté (30a) extérieur et le dispositif de verrouillage (50) comprend une dent d'arrêt (50b), et dans lequel l'étape d'activation comprend une sous-étape de déplacement de la dent d'arrêt (50b) dans laquelle la dent d'arrêt (50b) se met en prise avec une dent du profil denté (30a) extérieur.

15. Procédé selon l'une quelconque des revendications 11 à 14, dans lequel le déplacement du dispositif de verrouillage (50) entre la position déverrouillée et la position verrouillée est accompli en agissant sur un mécanisme d'actionnement (80) qui est relié au dispositif de verrouillage (50), et dans lequel le mécanisme d'actionnement (80) est commandé par un organe de commande (80a) qui est activé manuellement par l'utilisateur avec la main tenant de manière fonctionnelle une seconde poignée (61) reliée au corps (10) de la pince.
